(19) Europäisches Patentamt
European Patent Office
Office européen des brevets

(11) Publication number: **0 043 855**
**B1**

# (12) EUROPEAN PATENT SPECIFICATION

(45) Date of publication of patent specification: **08.07.87**

(51) Int. Cl.[4]: **C 08 G 69/04**, C 08 G 69/26, C 08 G 69/32, C 08 G 73/14

(21) Application number: **81900596.8**

(22) Date of filing: **07.01.81**

(86) International application number: **PCT/US81/00077**

(87) International publication number: **WO 81/02016 23.07.81 Gazette 81/17**

## (54) INJECTION MOLDABLE AMIDE-IMIDE COPOLYMERS AND TERPOLYMERS.

(30) Priority: **16.01.80 US 112651**

(43) Date of publication of application: **20.01.82 Bulletin 82/03**

(45) Publication of the grant of the patent: **08.07.87 Bulletin 87/28**

(84) Designated Contracting States: **DE FR GB**

(56) References cited:
**GB-A- 570 858**
**US-A-2 421 024**
**US-A-3 654 227**
**US-A-3 661 863**
**US-A-3 817 942**
**US-A-3 842 026**
**US-A-3 862 092**
**US-A-4 048 144**
**US-A-4 066 631**

(73) Proprietor: **AMOCO CORPORATION**
**200 East Randolph Drive**
**Chicago Illinois 60601 (US)**

(72) Inventor: **KESKE, Robert G.**
**646 South Wehrli Drive**
**Naperville, IL 60540 (US)**
Inventor: **STEPHENS, James R.**
**7 South 361 Arbor Drive**
**Naperville, IL 60540 (US)**

(74) Representative: **Ritter, Stephen David et al**
**Mathys & Squire 10 Fleet Street**
**London EC4Y 1AY (GB)**

**EP 0 043 855 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

BACKGROUND OF THE INVENTION

Field of the Invention

The field of this invention relates to tailor-made amide-imide copolymers and terpolymers prepared from tricarboxylic acid anhydride derivatives, N,N'-diacylated diamines, N-acylated diamines and diamines and to molding resins and molded articles prepared therefrom.

Background

Amide-imide polymers and copolymers are a relatively new class of organic compounds known for their solubility in nitrogen-containing solvents when in the polyamic acid form. The major application of these amide-imides has been wire enamels. This is illustrated in US—A—3 817 942 (1974), 3 661 832 (1972), 3 494 809 (1970) and 3 347 828 (1967). GB—A—570 858 (1945) discloses the general state of the art. Amide-imide polymers and copolymers have also been found useful for molding application as shown in US—A—4 016 140 (1977) and 3 573 260 (1971). None of the foregoing references discloses tailor-made amide-imide copolymers and terpolymers.

US—A—3 817 942, 3 842 026 and 3 654 227 describe polyamide-imides and polyimides, but the products described in these patents are not injection-moldable copolymers or terpolymers. Thus US—A—3 817 942 relates to the production of polymers containing only the structural unit

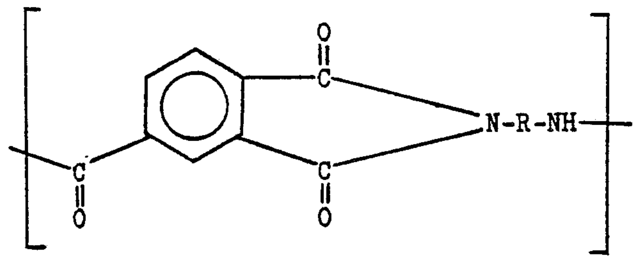

and these polymers are not injection moldable. Similarly US—A—3 842 026 concerns polyamide-imides which are only partially cured and have an "available weight loss" of 2 to 15% and are molded by sintering and fully curing polymer powder. US—A—3 654 227 relates to the production of generally insoluble and infusible polyimides by curing a low molecular weight prepolymer.

The general object of this invention is to provide injection moldable linear high molecular weight amide-imide copolymers and terpolymers. A more specific object of this invention is to provide a novel process for preparing injection moldable tailored linear high molecular weight amide-imide copolymers and terpolymers by reacting acylated diamines with tricarboxylic acid anhydrides and diamines, at a temperature of 10—371°C (50 to 700°F), wherein the imide, imide-imide, amide, amide-amide moieties incorporated into the polymer backbone can be controlled by acylating the amine functionality which is to form the amide and amide-imide moieties which polycondensation reaction is conducted at a temperature of 149—371°C (300 to about 700°F) while reacting directly at a temperature of 10 to 204°C (50°F to about 400°F) those diamines with the tricarboxylic anhydride compound which are intended to form the imide and imide-imide moieties of the amide imide copolymers and terpolymers.

More specifically, according to the present invention there is provided a process for the preparation of a tailored linear injection moldable polyamide-imide copolymer or terpolymer containing both aromatic and aliphatic moieties derived from aromatic and aliphatic diamines, which process comprises reacting at a temperature of 10 to 371°C (50 to 700°F) at least one fully or partially acylated aromatic or aliphatic diamine or a mixture of fully or partially acylated aromatic and aliphatic diamines with at least one tricarboxylic acid anhydride compound and at least one aliphatic or aromatic diamine or a mixture of aromatic and aliphatic diamines wherein the ratio of the total moles of fully, partially acylated and unacylated diamines to tricarboxylic acid anhydride compound is preferably 1:1 and 40 to 100% of the total amine functionality is acylated.

The molar ratio of the aromatic to aliphatic, cycloaliphatic and araliphatic diamines are suitably in the range of 9:1 to 1:1, advantageously in the range of 3:1 to 3:2.

In the novel process, the imide and imide-imide moieties incorporated into the polymer backbone are controlled by reacting at a temperature of 10 to 371°C (50 to 400°) diamines with the tricarboxylic anhydride compound to form imide and imide-imide linkages and by the reaction of acylated diamines at a temperature of 149 to 371°C (300 to 700°F) to form amide and amide-imide linkages and sometimes acylated diamines at a temperature of 176 to 371°C (350°F to 700°F) which form imide or imide-imide linkages. Generally the reaction of free amine groups is conducted prior to the reaction of acylated amine groups. Thus the initial temperature of the polymerization process is at the lower end of the range cited, from 10 to 371°C (50°C to 400°F), and the final polymerization temperatures are in the range of 149 to 371°C (300°F to 700°F). Generally, depending on the type of product desired, the range of acylation can be from 40% of the total amine functionality up to 100% of the total amine functionality, preferably 50—95% of the

total amine functionality. Advantageously these monomers are mixed in the presence of solvents such as N-methylpyrrolidone, N,N-dimethylacetamide and acetic acid. According to the process of this invention the copolymers and terpolymers may contain from two up to six different structural units set forth hereinbelow:

A. 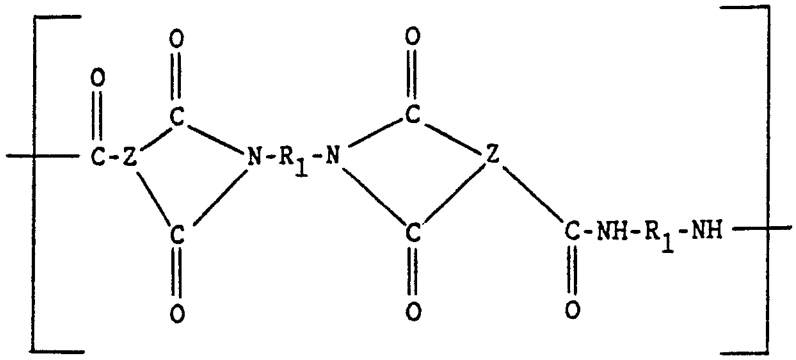

B. 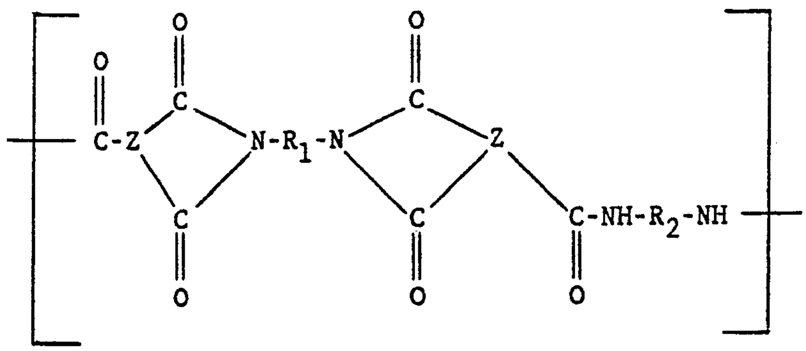

C. 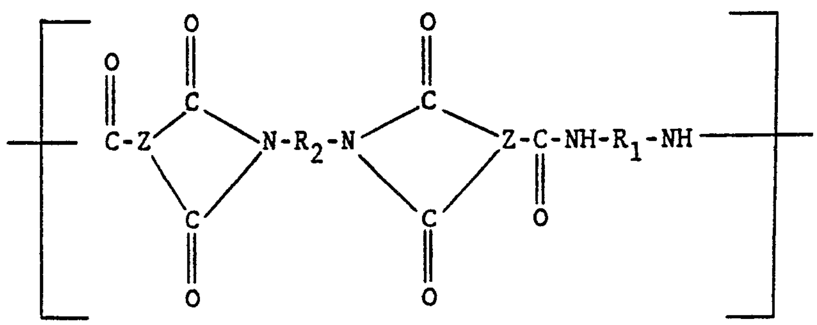

D. 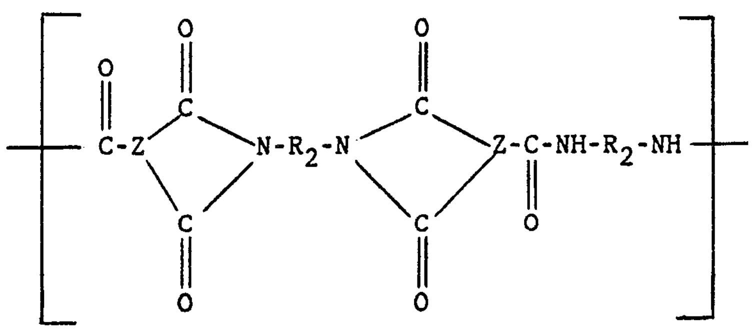

E. 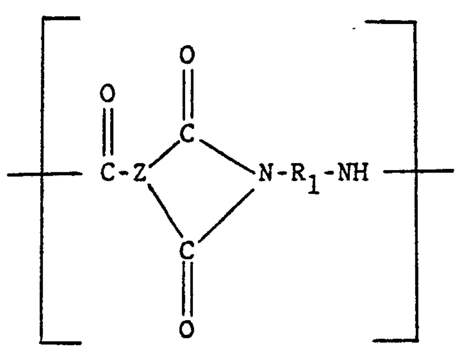

F.

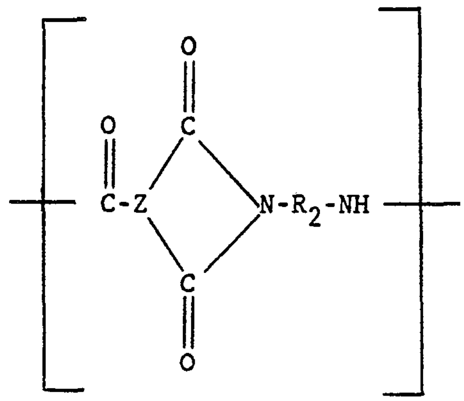

In the foregoing structural units Z is a trivalent aromatic radical. Z may be a trivalent radical of benzene, naphthalene, biphenyl, diphenyl ether, diphenyl sulfide, diphenyl sulfone and ditolyl ether.

Useful aromatic tricarboxylic acid anhydrides which contribute the trivalent radical moiety of Z include those compounds containing at least one pair of carboxyl groups in the ortho position with respect to each other or otherwise situated in a fashion which permits the formation of an anhydride structure, one other carboxyl group and from 9 to 21 carbon atoms. Within these limits, these compounds may contain one or more benzenoid rings such as, for instance, trimellitic anhydride and its isomers and multiring compounds such as the 1,8-anhydride of 1,3,8-tricarboxylnaphthalene. Usually these compounds contain up to three benzenoid rings. The preferred aromatic tricarboxylic acid anhydride employed in the novel process is trimellitic anhydride.

$R_1$ is a divalent aromatic radical containing six to twenty carbon atoms, said aromatic radical comprising a single aromatic nucleus or two such nuclei joined directly or via stable linkages selected from

$$-S-,\ -O-,\ -\overset{\overset{O}{\|}}{S}-,\ -SO_2-,\ -CO-,$$

and methylene radicals. Aromatic diamines include *para* and *meta*-phenylene diamines, *para*- and *meta*-xylenediamine, *para*-toluenediamine, 2,4-toluenediamine, 2,6-toluenediamine, 3,5-toluenediamine, oxybis(aniline), thiobis(aniline), sulfonylbis(aniline), diaminobenzophenone, methylenebis(aniline), benzidine, 1,5-diaminonaphthalene, oxybis(2-methyaniline) and thiobis(2-methylaniline). Examples of other useful aromatic primary diamines are the following: 2,2′-naphthalene diamine, 4,4′-naphthalene diamine, 2,2′-biphenylene diamine, 3,3′-biphenylene diamine, 4,4′-biphenylene diamine and the like; 3,3′-dichlorobenzidine, ethylene dianiline(4,4′-diaminodiphenyl ethane), propylene dianiline(4,4′-diaminodiphenyl propane), and the like; ketodianline, 3,3′-diaminodiphenyl sulfide 4,4′-diaminodiphenyl sulfone, hexafluoroisopropylidenebis(4-phenyl amine), 4′4-diaminodiphenyl methane, 2,6-diaminopyridine, bis(4-aminophenyl)diethyl silane, bis(4-aminophenyl)ethyl phosphine oxide, bis(4-aminophenyl)phenyl phosphine oxide, bis(4-aminophenyl)-N-phenylamine, bis(4-aminophenyl)-N-methylamine, 3,3′-dimethyl-4,4′-diaminobiphenyl, *para*-bis(2-methyl-4-amino-phenyl)benzene and 3,3′-diaminoadamantane.

$R_2$ is a divalent aliphatic, cycloaliphatic or araliphatic radical of from two to eighteen carbon atoms derived from aliphatic diamines such as ethylenediamine, propylenediamine, 2,2-dimethylpropylene diamine, tetramethylenediamine, hexamethylenediamine, octamethylenediamine, nonamethylene-diamine, decamethylenediamine, dodecamethylenediamine, 4,4′-diaminodicyclohexylmethane, *meta*- and *para*-xylylene diamine, 4,4′-diaminodicyclohexylethane, bis(aminocyclohexyl)propane, bis(*para*-aminocyclohexyl)sulfide, bis(aminocyclohexyl)sulfone, bis(aminocyclohexyl)ether, bis(aminocyclohexyl)diethyl silane, bis(aminocyclohexyl)ethyl phosphine oxide, bis(aminocyclohexyl)-phenyl phosphine oxide, bis(aminocyclohexyl)N-phenyl amine, bis(aminocyclohexyl)-N-methyl amine, 1,2-bis(3-amino-propoxy)ethane, 3-methoxyhexamethylenediamine, 2,5-dimethylheptamethylenediamine, 5-methyl-nonamethylenediamine, 1,4-diaminocyclohexane and 1,2-diaminooctadecane.

The diamines can suitably be acylated with aliphatic acids or anhydrides such as acetic anhydride, acetic acid and proprionic anhydride, or any aliphatic acid or anhydride containing from 2 to 8 carbon atoms per acid, preferably 2 to 4 carbon atoms per acid or 4 to 16 carbon atoms per anhydride, preferably 4 to 8 carbon atoms. Formic acid or anhydride cannot be used to acylate the diamines.

Utilizing the novel process, seven different classes of amide-imide copolymers and terpolymers have been prepared. Suitably each copolymer and terpolymer is prepared utilizing both aromatic and aliphatic diamines. Usually the molar ratio of the aromatic to aliphatic diamines is in the range of 9:1 to 1:1. Advantageously, this range has been found to be 3:1 to 3:2. The copolymers and terpolymers have structural units as shown in Table I hereinbelow.

TABLE I

| Polymer Class | Structural Units |
|---|---|
| I | A, B |
| II | A, C |
| III | A, B, C, D |
| IV | A, B, E |
| V | A, C, E |
| VI | A, B, C, D, E |
| VII | A, B, C, D, E, F |

In the polymers of Classes I, II, and III the tricarboxylic acid anhydride group in the polymer is ordered head to head and tail to tail due to the order of the acylation of the diamines. Specifically, the ratio of diacylated diamine, trimellitic anhydride, unacylated diamine is maintained at 1:2:1. The polymer of Class I is suitably prepared by diacylating the aliphatic, cycloaliphatic or araliphatic diamine and part of the aromatic diamine. The remainder of the aromatic diamine is reacted with two equivalents of the tricarboxylic acid anhydride compound to produce a bis imide/bis acid intermediate. The reaction between the bis imide/bis acid and the diacetyl derivative of the aromatic diamine produces Structural Unit A. In a similar manner the reaction between the bis imide/bis acid and the diacetyl derivative of the aliphatic, cycloaliphatic or araliphatic diamine produces Structural Unit B. The random dispersion of Structural Units A and B along the copolymer and terpolymer backbone thus make up the complete structure of Polymer I. When the polymer is further polymerized under solid state polymerization conditions at a temperature of 204 to 371°C (400 to 700°F) a high molecular weight injection moldable copolymer and terpolymer is obtained having inherent viscosity in the range of 0.3 to 2.0. For the purpose of this invention inherent viscosity is measured at 25°C and 0.5% w/v in 60/40 w/w phenol/1,1,2,2-tetrachloroethane, N-methylpyrollidone or 100% sulfuric acid. The term "solid state polymerization" refers to chain extension of polymer molecules under conditions where the polymer molecules retain their solid form and do not become a fluid mass.

The copolymers and terpolymers of Class II are similar to polymers of Class I, but in this instance the aliphatic, cycloaliphatic and araliphatic diamine moieties are used directly to form imide groups (Structural Unit C) and the aromatic diamines are used to form either two amide groups by reaction of the diacylated derivative (Structural Unit A) or two imide groups by direct reaction of the diamine (Structural Unit C). The resultant Class II copolymers and terpolymers are made up of a random dispersion of units A and C. Class III copolymers and terpolymers are made up of Structural Units A, B, C and D and have all the trimellitoyl groups ordered head to head and tail to tail and all diamines are allowed either to form only two amide groups or two imide groups.

In copolymers and terpolymers of Class IV, V, and VI the aliphatic, cycloaliphatic and araliphatic diamines are used to form only di imide or di amide groups (Structural Units B, C, and D). Thus the trimellitoyl groups which are attached to the aliphatic or araliphatic diamines are ordered head to head or tail to tail. The aromatic diamines are acylated randomly, thus, some are diacylated while others are monoacylated or unacylated. The trimellitoyl groups which are attached to two aromatic diamine groups are randomly distributed between a head to head, a tail to tail, or a head to tail sequence (Structural Unit E). Polymer of Class IV is prepared by the reaction of diacylated aliphatic, cycloaliphatic or araliphatic diamines (which confines these amines to formation of two amide groups) with the tricarboxylic acid anhydride and un- or partially acylated aromatic diamines where the acylation level used is the amount that would give 50% acylation of all amine functionality utilized in the polymerization. By way of specific example, if a 3:1 ratio of aromatic to aliphatic diamine were used, all the aliphatic diamine would be diacylated and one third of the aromatic diamine functionality would be acylated. Polymer of Class V is prepared by the reaction of unacylated aliphatic, cycloaliphatic, or araliphatic diamines (which confines these amines to formation of two imide groups) with the tricarboxylic acid anhydride and fully or partially acylated aromatic diamines. The level of acylation can vary from 50% of the total amine functionality utilized in the reaction up to the aromatic diamine being fully diacylated. Polymer of Class VI is similar to the polymers of Class IV or V except that in polymers of Class VI the aliphatic diamines are used in both di imide or di amide formation and only about 50% of the total amine functionality is acylated. Polymers of Class VII are fully random in that both aliphatic diamine and aromatic diamine moieties are distributed between imide and amide

portions and all trimellitoyl groups are free to be arranged head to head, tail to tail or head to tail and 50 to 100% acylation of amine functionality is utilized. All of the foregoing polymers have an inherent viscosity in the range of 0.3 to 2.0 dl/g giving them molecular weights in the range of 3,000 to 100,000. All these polymers can be injection molded and can be used as engineering plastics. They have excellent mechanical properties as shown in Table IV hereof.

Thus, by way of illustration, the following products may be obtained from the specified reactants:—

(i) Where at least one fully acylated aliphatic diamine or a mixture of fully acylated aromatic and aliphatic diamines is reacted with at least one tricarboxylic acid anhydride compound and at least one aromatic diamine and the molar ratio of acylated diamine:tricarboxylic acid anhydride compound:aromatic diamine is 1:2:1 the copolymer produced may comprise the following structural units:

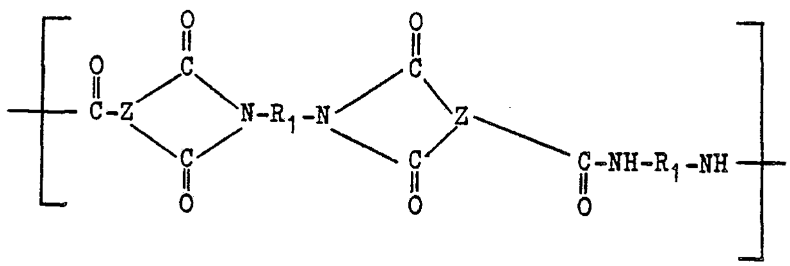

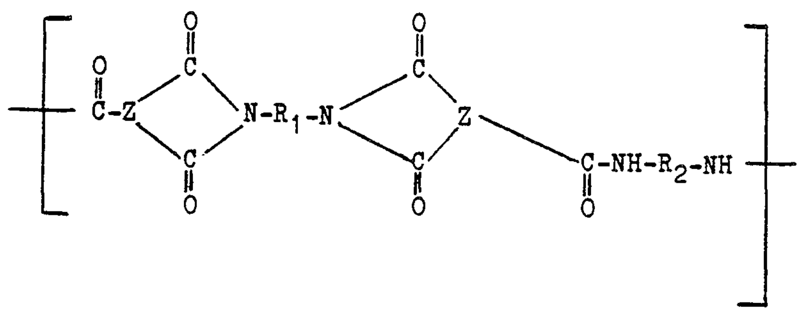

(ii) Where at least one fully acylated aromatic diamine is reacted with at least one tricarboxylic acid anhydride compound and at least one aliphatic diamine or mixture of aliphatic and aromatic diamines and the molar ratio of acylated diamine:tricarboxylic acid anhydride compound:aliphatic and aromatic diamine is 1:2:1 the copolymer produced may comprise the following structural units:

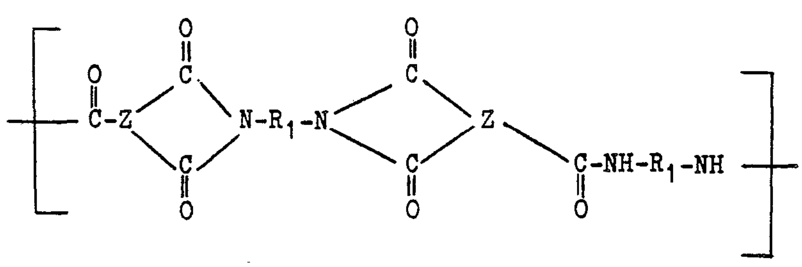

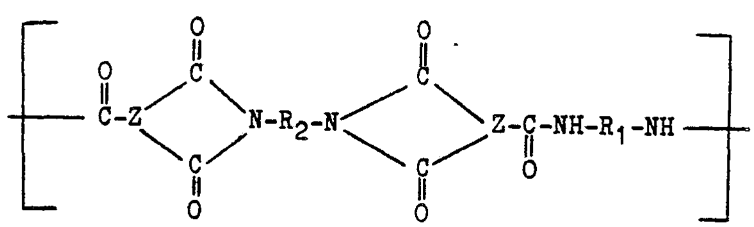

(iii) Where fully acylated aromatic and aliphatic diamines are reacted with at least one tricarboxylic acid anhydride compound and aliphatic and aromatic diamines and the molar ratio of acylated diamine:tricarboxylic acid anhydride compound:aliphatic and aromatic diamine is 1:2:1 the copolymer produced may comprise the following structural units:

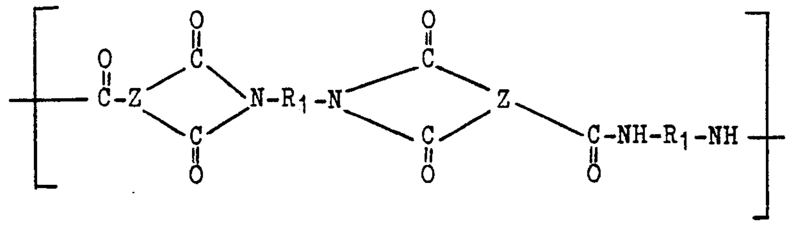

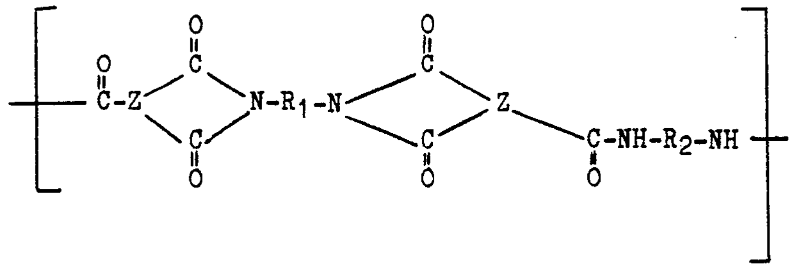

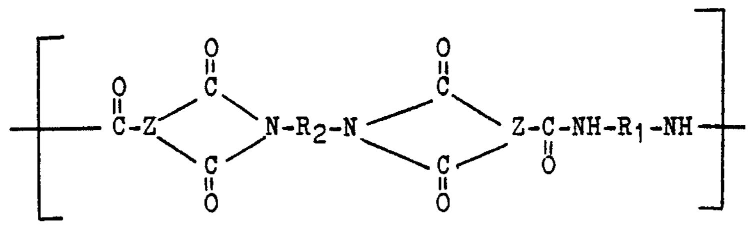

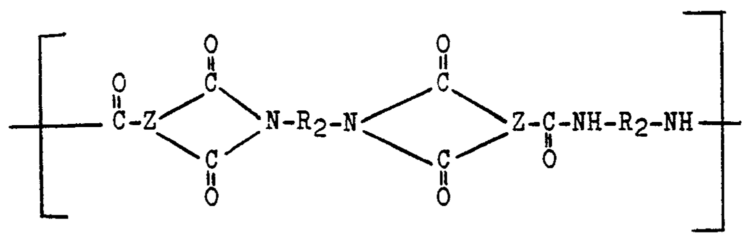

(iv) Where a mixture of fully or partially acylated aromatic and fully acylated aliphatic diamines is reacted with at least one tricarboxylic acid anhydride compound and at least one aromatic diamine and one half of the total amine functionality is acylated the copolymer produced may comprise the following structural units:

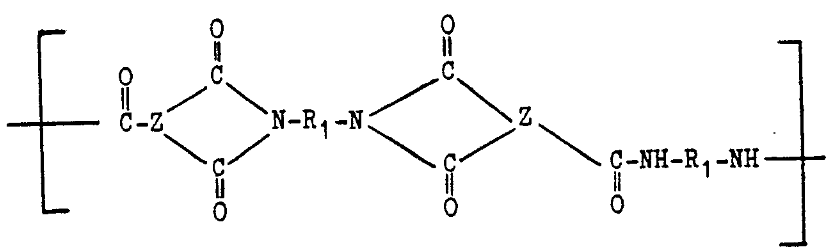

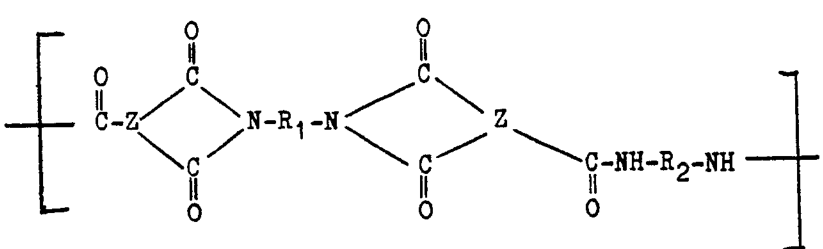

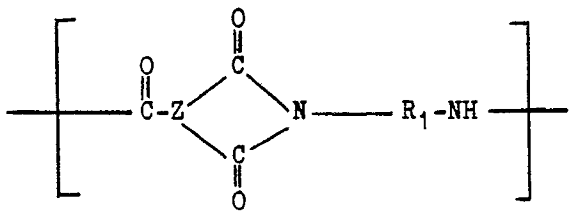

(v) Where at least one fully or partially acylated aromatic diamine is reacted with at least one tricarboxylic acid anhydride compound and at least one aliphatic diamine or a mixture of aliphatic and aromatic diamines and at least one half of the total amine functionality is acylated the copolymer produced may comprise the following structural units:

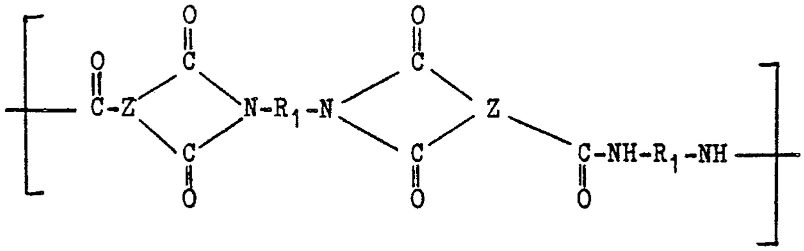

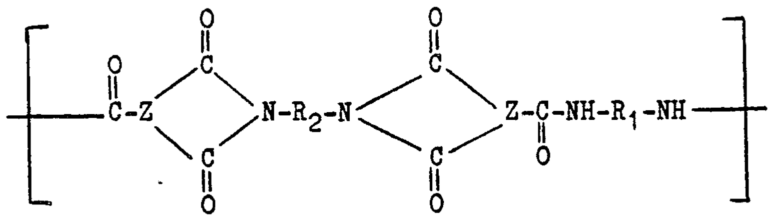

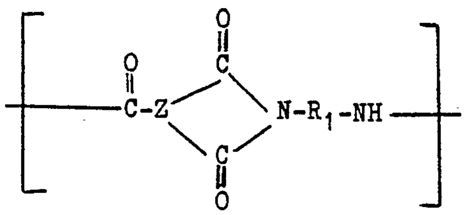

(vi) Where at least one fully or partially acylated aromatic diamine and at least one fully acylated aliphatic diamine are reacted with at least one tricarboxylic acid anhydride compound and aliphatic and aromatic diamines and one half of the total amine functionality is acylated the copolymer produced may comprise the following structural units:

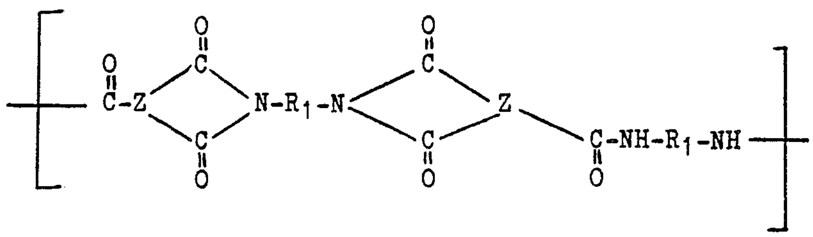

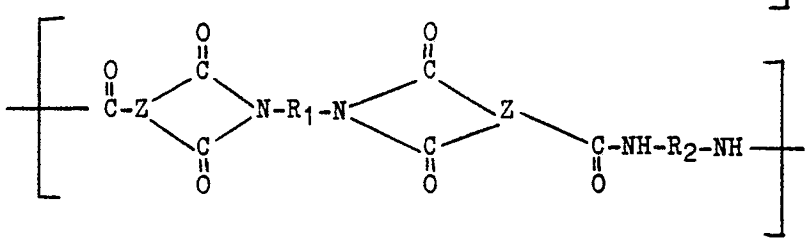

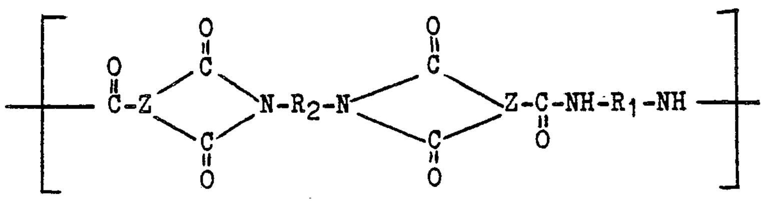

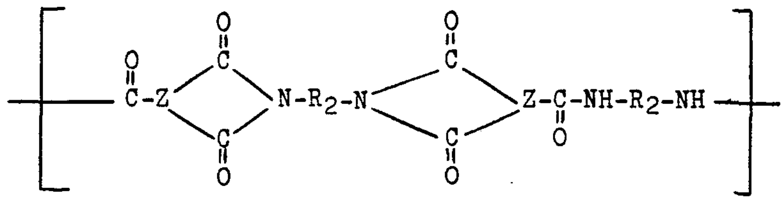

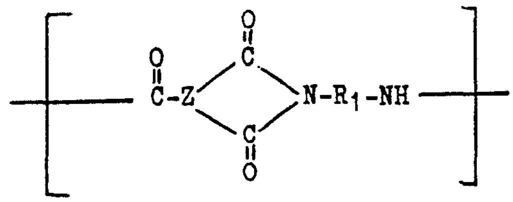

(vii) Where fully or partially acylated aromatic and aliphatic diamines are reacted with at least one tricarboxylic acid anhydride compound and 50 to 100% of the total amine functionality is acylated the copolymer produced may comprise the following structural units:

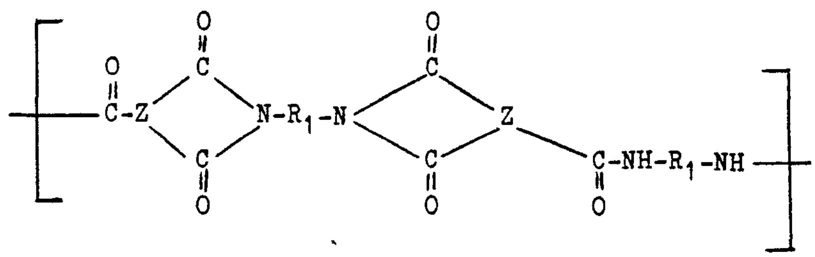

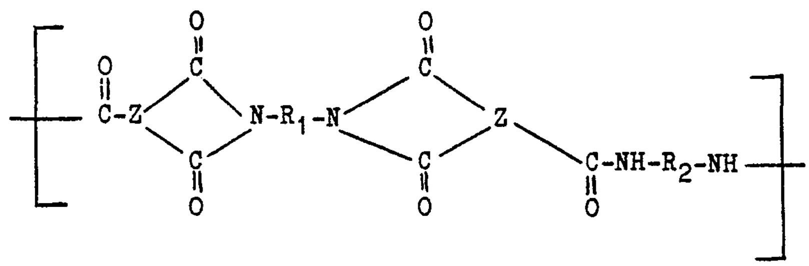

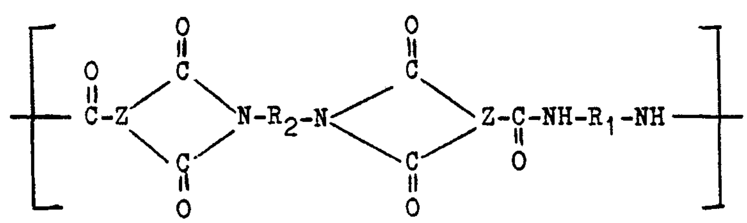

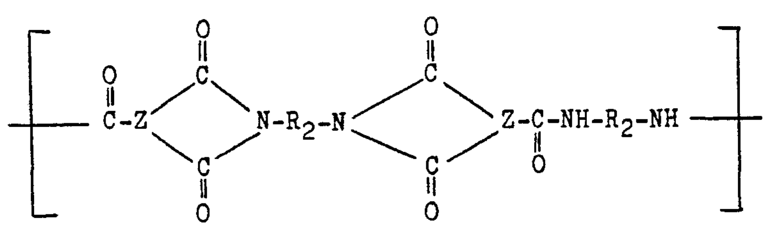

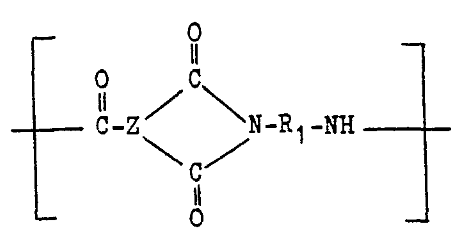

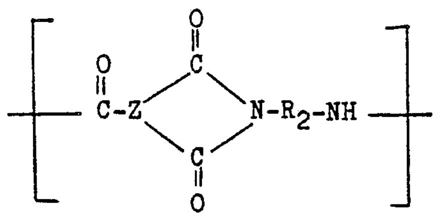

wherein Z, $R_1$ and $R_2$ are as defined previously.

With the use of Table II, a general method of preparation of these different polymers is herewith given. Polymers of Structural Classes I, II, III, V and VII are prepared by first mixing and reacting the ingredients of columns J, K and L usually in the presence of a solvent. If the acylating agent is active (e.g., an acid anhydride), reaction will occur readily at room temperature. When slow to react acylating agents (e.g., acetic acid) are used, this mixture must generally be heated to effect the proper amount of condensation. The reactants from columns P, Q and R can be premixed, prereacted, or added separately to the prereacted mixture of J, K and L. The solvent is removed by distillation and the mixture is polymerized under melt polycondensation conditions to yield the tailored polymer. Polymers of Structural Classes IV and VI are prepared by first mixing and reacting the ingredients of columns K and L, usually in the presence of a solvent. If the acylating agent is active (e.g., an acid anhydride), reaction will occur readily at room temperature. This is then followed by the addition of the ingredient from column P. After this mixture has reacted, the ingredients from columns Q and R can be added separately or in a premixed or prereacted form. When slow to react acylating agents are used (e.g., acetic acid), the mixture of K and L must generally be heated to effect the proper amount of condensation. After the addition of the ingredient from column P, a further period of heating will be required to effect the proper amount of condensation. After this mixture has reacted, the ingredients from columns Q and R can be added separately or in a premixed or prereacted form. The solvent is removed by distillation and the mixture is polymerized under melt polycondensation conditions to yield the tailored polymer. In certain cases the sequences of addition of reactants can be altered, but only to the extent that the level and type of acylation of the specific amine functionalities remain unchanged. In many cases, the melt prepared polymers from all structural classes are solid state polymerized prior to fabrication. However, further melt polymerization at 260—371°C (500—700°F) may also be advantageously used in lieu of solid state polymerization to form the copolymer or terpolymer which is suitable for injection molding.

TABLE II

| Structural Class | J Moles of ArDA | K Moles of RDA | L Moles of Acylating Agent | P Moles of ArDA | Q Moles of RDA | R Moles of TMA |
|---|---|---|---|---|---|---|
| I | $\frac{X-T}{2}$ | T | X | $\frac{X}{2}$ | O | X |
| II | $\frac{X}{2}$ | O | X | $\frac{X-T}{2}$ | T | X |
| III | $\frac{X-M}{2}$ | M | X | $\frac{X-T+M}{2}$ | T − M | X |
| IV | O | T | X | Y | O | X |
| V | Y | O | X to 2Y | O | T | X |
| VI | O | M | X | Y | T − M | X |
| VII | Y | T | X to 2X | O | O | X |

Acylating agents include acetic acid or anhydride, propionic acid or anhydride, or any aliphatic acid or anhydride containing from 2 to 8 carbon atoms per acid, preferably 2 to 4 carbon atoms per acid or 4 to 16 carbon atoms per anhydride, preferably 4 to 8 carbon atoms. Formic acid cannot be used as an acylating agent in this process.

X = total moles TMA
Y = total moles ArDA
T = total moles RDA
$X = Y + T$
TMA = Trimellitic Anhydride
ArDA = Aromatic Diamine
RDA = Aliphatic Diamine
$0 < M < T \leqslant Y$

By way of particular example, if it is desired to produce an amide-imide copolymer and terpolymer of Structural Class V wherein the ratio of aromatic to aliphatic diamines is 3 to 1 then X = 4, Y = 3 and T = 1, and 3 moles of the aromatic diamine are acylated with 4 to 6 moles of the acylating agent. The acylating agent may be acetic acid, acetic anhydride or propionic anhydride or any aliphatic acid which contains from 2 to 8 carbon atoms or anhydride which contains from 4 to 16 carbon atoms. 4 moles of trimellitic compound are mixed or reacted with 1 mole of aliphatic diamine or added separately to the acylated diamine mixture. The mixing is conducted in the presence of solvents such as N-methylpyrrolidone, N,N-dimethylacetamide and acetic acid. The organic polar solvent is removed by distillation and the mixture is polymerized under melt polymerization conditions to yield an injection moldable copolymer and terpolymer of Class V. The novel process enables one to tailor the polymerization so that different structural classes can be incorporated depending on the properties desired in the resulting product. By way of specific examples, if long term thermal stability is of prime importance, one may wish to incorporate the aliphatic, cycloaliphatic or araliphatic into formation of the more stable imide group as shown in Structural Classes II and V. If impact is of prime importance, the polymers with a more random structure (Classes IV, V, VI, and especially VII) tend to have better impact properties. These copolymers and terpolymers have an inherent viscosity of 0.3 to 2.0 and heat deflection temperatures greater than 149°C (300°F) without the use of fillers or fiber reinforcements. Although the first-stage melt polymerization products have an inherent viscosity of at least 0.2 dl/gram and can be used for injection molding application, it is generally preferable to start with a copolymer having been solid state polymerized or further melt polymerized.

The solid state polymerization which can be carried out below the melting point of the polymer can be conducted in several ways. However, all of the techniques require heating the ground or pelletized copolymers and terpolymers below the polymer melting point, generally at a temperature of 204 to 288°C (400 to 550°F), while either sparging with an inert gas, such as nitrogen or air, or operating under vacuum.

According to the novel process of this invention linear, high molecular weight copolymers and terpolymers have been prepared containing both aromatic and aliphatic moieties by a melt process. This in itself is a novel process feature since the prior art teaches only interfacial and solution polymerization techniques for the production of fully ordered head to head, tail to tail and completely random amide-imide polymers. Furthermore, according to the novel process a method for tailor-making amide-imide copolymers and terpolymers has been disclosed. These copolymers and terpolymers have excellent mechanical and thermal properties and can be readily injection molded. This injection moldability of these polymers can be partially contributed to the fact that these polymers are linear and are not cross-linked. Injection molding of the copolymers and terpolymers is accomplished by injecting the polymer into the mold maintained at a temperature of 66—232°C (150—450°F). In this process a 0.1—2.0 minute cycle is used with a barrel temperature of 218 to 343°C (425°F to 650°F). The injection molding conditions are given in Table III.

TABLE III

| | |
|---|---|
| Mold Temperature | 66—232°C (150—450°F) |
| Injection Pressure | 6.89—275 MPa (1000—40,000 psi) and held for 0.5—20.0 seconds |
| Back Pressure | 0—3.4 MPa (0—500 psi) |
| Cycle Time | 6—120 seconds |
| Extruder: | |
| Nozzle Temperature | 218—343°C (425°F to 650°F) |
| Barrel Zones | 218—343°C (425°F to 650°F) |
| Screw: | |
| 10—200 revolutions/minute | |

The mechanical properties of the copolymers and terpolymers prepared in Examples 1—10 are given in Table IV. Examples 11—14 teach the preparation of the 3:2:1 trimellitic anhydride:m-toluenediamine:1,6-hexanediamine polymers. The mechanical properties are given in Table V and show how the increase in randomness in going from Class V to Class VII increases impact. Table VI, however, shows how the direction of the aliphatic diamine to only imide formation in Class V can give better thermal stability.

TABLE IV
Mechanical Properties of Copolymer and Terpolymers

| Polymer Class | ASTM Method | V | IV |
|---|---|---|---|
| ArDA/RDA | | MBA/HMDA | MBA/HMDA |
| ArDA/RDA ratio | | 3/1 | 3/1 |
| Tensile Strength, MPa (psi) | D—638 | 118 (17,100) | 90.3 (13,100) |
| Tensile Modulus, MPa (psi) | D—638 | 2482 (360,000) | 2489 (361,000) |
| Elongation at Break, % | D—638 | 8.2 | 5.5 |
| Flexural Strength, MPa (psi) | D—790 | 168 (24,400) | 153 (22,200) |
| Flexural Modulus, MPa (psi) | D—790 | 3454 (501,000) | 3110 (451,000) |
| Izod Impact J/m (ft lb/in notch) | D—256 | 24.6 (0.46) | 20.3 (0.38) |
| Tensile Impact, KJ/$m^2$ (ft lb/$in^2$) | D—1822 | 118.2 (56.2) | 67.5 (32.1) |
| HDT at 1.8 MPa (264 psi), °C (°F) | D—648 | 205 (401) | 203 (398) |
| Density | | 1.29 | 1.29 |
| Inherent viscosity | | 1.01 | 0.99 |
| Example | | 1 | 5 |

ArDA = Aromatic diamine
RDA = Aliphatic diamine
MBA = Methylenebisaniline
HMDA = 1,6-Hexanediamine
MXDA = Metaxylylenediamine
OBA = Oxybisaniline
MPDA = Metaphenylenediamine

TABLE IV (Cont'd.)
Mechanical Properties of Copolymer and Terpolymers

| Polymer Class | ASTM Method | VII | V |
|---|---|---|---|
| ArDA/RDA | | MBA/HMDA | MBA/MXDA |
| ArDA/RDA ratio | | 3/1 | 3/1 |
| Tensile Strength, MPa (psi) | D—638 | 128 (18,500) | 134 (19,500) |
| Tensile Modulus, MPa (psi) | D—638 | 2503 (363,000) | 2813 (408,000) |
| Elongation at Break, % | D—638 | 16.9 | 17.1 |
| Flexural Strength, MPa (psi) | D—790 | 162 (23,500) | 183 (26,600) |
| Flexural Modulus, MPa (psi) | D—790 | 3172 (460,000) | 3634 (527,000) |
| Izod Impact J/m (ft lb/in notch) | D—256 | 106.3 (1.99) | 20.3 (0.38) |
| Tensile Impact, KJ/$m^2$ (ft lb/$in^2$) | D—1822 | 152.0 (72.3) | 252.4 (120) |
| HDT at 1.8 MPa (264 psi), °C (°F) | D—648 | 211 (412) | 216 (420) |
| Density | | 1.29 | 1.30 |
| Inherent viscosity | | 0.91 | 0.81 |
| Example | | 9 | 6 |

ArDA = Aromatic diamine
RDA = Aliphatic diamine
MBA = Methylenebisaniline
HMDA = 1,6-Hexanediamine
MXDA = Metaxylylenediamine
OBA = Oxybisaniline
MPDA = Metaphenylenediamine

TABLE IV
Mechanical Properties of Copolymer and Terpolymers

| Polymer Class | ASTM Method | IV | IV | VII |
|---|---|---|---|---|
| ArDA/RDA | | MBA/MXDA | MPDA/HMDA | MPDA/HMDA |
| ArDA/RDA ratio | | 3/1 | 3/1 | 3/1 |
| Tensile Strength, MPa (psi) | D—638 | 65.5 (9,500) | 110 (15,900) | 94.5 (13,700) |
| Tensile Modulus, MPa (psi) | D—638 | 2792 (405,000) | 3013 (437,000) | 3103 (450,000) |
| Elongation at Break, % | D—638 | 2.9 | 5.3 | 4.1 |
| Flexural Strength, MPa (psi) | D—790 | 97.2 (14,100) | 184 (26,700) | 184 (26,700) |
| Flexural Modulus, MPa (psi) | D—790 | 3503 (508,000) | 4027 (584,000) | 3951 (573,000) |
| Izod Impact J/m (ft lb/in notch) | D—256 | 19.2 (0.36) | 19.2 (0.36) | 17.6 (0.33) |
| Tensile Impact, $KJ/m^2$ ($ft\ lb/in^2$) | D—1822 | 13.7 (6.5) | 106.7 (50.7) | 100.9 (48.0) |
| HDT at 1.8 MPa (264 psi), °C (°F) | D—648 | 213 (415) | 223 (433) | 222 (432) |
| Density | | 1.30 | 1.35 | 1.35 |
| Inherent viscosity | | 0.62 | 0.92 | — |
| Example | | 7 | 4 | 10 |

ArDA = Aromatic diamine
RDA = Aliphatic diamine
MBA = Methylenebisaniline
HMDA = 1,6-Hexanediamine
MXDA = Metaxylylenediamine
OBA = Oxybisaniline
MPDA = Metaphenylenediamine

Table IV (Cont'd.)
Mechanical Properties of Copolymer and Terpolymers

| Polymer Class | ASTM Method | V | V |
|---|---|---|---|
| ArDA/RDA | | OBA/MXDA | OBA/MXDA |
| ArDA/RDA ratio | | 3/2 | 2/1 |
| Tensile Strength, MPa (psi) | D—638 | 125 (18,100) | 149 (21,640) |
| Tensile Modulus, MPa (psi) | D—638 | 3254 (472,000) | 3365 (488,000) |
| Elongation at Break, % | D—638 | 11.7 | 17.1 |
| Flexural Strength, MPa (psi) | D—790 | 196 (28,400) | 208 (30,200) |
| Flexural Modulus, MPa (psi) | D—790 | 4040 (586,000) | 4233 (614,000) |
| Izod Impact J/m (ft lb/in notch) | D—256 | 22.4 (0.42) | 33.6 (0.63) |
| Tensile Impact, KJ/m$^2$ (ft lb/in$^2$) | D—1822 | 119.7 (56.9) | 80.5 (38.3) |
| HDT at 1.8 MPa (264 psi), °C (°F) | D—648 | 212 (413) | 218 (424) |
| Density | | 1.33 | 1.34 |
| Inherent viscosity | | 1.26 | 1.41 |
| Example | | 2 | 8 |

ArDA = Aromatic diamine
RDA = Aliphatic diamine
MBA = Methylenebisaniline
HMDA = 1,6-Hexanediamine
MXDA = Metaxylylenediamine
OBA = Oxybisaniline
MPDA = Metaphenylenediamine

The following Examples illustrate the preferred embodiments of this invention.

Example 1 — Preparation of the 4:3:1
TMA:MBA:HMDA Polymer of Structural Class V

A five liter three-necked flask, equipped with a variable speed, mechanical stirrer, nitrogen sparge tube on a pressure-equalizing addition funnel, and a distillation head and condenser was charged with 594 g (3.0 moles) methylenebisaniline and 400 ml of dimethylacetamide (DMAC). The nitrogen sparge and stirring were started and acetic anhydride, 408 g, (4.0 moles) was added over 5 minutes. Trimellitic anhydride, 768 g, (4.0 moles) was added over seven minutes. This was followed by the addition of 116 g (1.0 mole) of 1,6-hexanediamine in 200 ml of DMAC over a period of 5 minutes. The temperature of the spherical heating mantle surrounding the bottom half of the flask was set at 327°C (620°F) and the Variac controlling the top half was set at 40. After 105 minutes approximately 950 ml had distilled and the temperature of the bottom half of the mantle was then increased to 366°C (690°F) and the Variac to 50. After 25 minutes more, 50 ml more distillate was collected and house vacuum 684 Pa (20 in Hg) was drawn on the system. After 25 minutes under vacuum about 50 ml of distillate was collected and the polymer had become extremely viscous. After cooling and grinding the polymer had an inherent viscosity of 0.44 dl/g in 60:40 w/w phenol:tetrachloroethane or 0.68 dl/g in 100% sulfuric acid at 25°C and 0.5% w/v concentration. The polymer was solid state polymerized by heating at 255°C (491°F) for 16 hours under high vacuum 0.15 KPa (0.1 mm Hg). The inherent viscosity increased to 1.01 dl/g in 60:40 w/w phenol:tetrachloroethane at 25°C and 0.5% w/v concentration. The mechanical properties for this polymer are given in Column 1 of Table IV.

Example 2 — Preparation of the 5:3:2
TMA:OBA:MXDA Polymer of Structural Class V

A five liter three-necked flask, equipped with a variable speed, mechanical stirrer, nitrogen sparge tube on a pressure-equalizing addition funnel, and a distillation head and condenser was charged with 480 g (2.4 mole) of oxybisaniline and 700 ml of acetic acid. The nitrogen sparge (375 $cm^3$/min) and stirring were started and acetic anhydride, 408 g, (4 moles) was added over 3 minutes. Trimellitic anhydride, 768 g, (4.0 mole) was added over 6 minutes. This was followed by the addition of 217.6 g (1.6 mole) of metaxylylenediamine over 1 minute. The temperature of the bottom half of the spherical heating mantle surrounding the flask was set at 343°C (650°F) and the Variac controlling the top half was set at 30. After 54 minutes 550 ml of distillate had been collected and the temperature was raised to 357°C (675°F). After 156 minutes more an additional 590 ml of distillate had been collected, the polymer melt was quite thick. Stirring was continued for 13 minutes under house vacuum 68 kPa (20 in Hg). The polymer was then cooled under nitrogen and ground. The polymer had an inherent viscosity of 0.33 dl/g in 60:40 w/w phenol:tetrachloroethane @ 25°C and 0.5% w/v concentration. The polymer was solid state polymerized by heating under vacuum 0.6—1.2 kPa (0.40—0.80 mm Hg) for 17 hours @ 254°C (490°F) and 16 hours at 266°C (510°F). During this time the inherent viscosity of the polymer increased to 1.26.

Example 3 — Preparation of a 4:3:1
TMA:MBA:HMDA Polymer of Structural Class I

A two liter three-necked flask, equipped with a variable speed mechanical stirrer, nitrogen sparge tube on a pressure-equalizing addition funnel, and a distillation head and condenser was charged with 58 g (0.5 mole) 1,6-hexanediamine, 99 g (0.5 mole) methylenebisaniline (MBA) and 400 ml DMAC. The nitrogen sparge (375 $cm^3$/min) and stirrer were started and 204 g (2.0 mole) of acetic anhydride was added over 9 minutes. Trimellitic anhydride, 384 g, (2.0 mole) was added over 2 minutes and followed by the addition of 198 g (1.0 mole) of MBA. The temperature of the bottom half of the spherical heating mantle surrounding the flask was set at 327°C (620°F) and the Variac controlling the top half was set at 40. After 90 minutes the polymer was extremely thick and 620 ml had been distilled. Heating was now stopped and the polymer was cooled under nitrogen and then ground. The polymer had an inherent viscosity of 0.11 dl/g in 100% sulfuric acid @ 25°C and 0.5% w/v concentration. The polymer was solid state polymerized by heating @ 243°C (470°F) under high vacuum 0.18 kPa (0.12 mm Hg) for 17 hours. The inherent viscosity increased to 1.42.

Example 4 — Preparation of the 4:3:1
TMA:MPDA:HMDA Polymer of Structural Class IV

A five liter three-necked flask equipped as in Example 1 was charged with 324 g (3.0 mole) of metaphenylenediamine and 600 ml of DMAC. The nitrogen sparge (375 $cm^3$/min) and stirring were started and 204 g (2.0 mole) of acetic anhydride was added over 10 minutes. This was followed by the addition of 786 g (4.0 mole) of trimellitic anhydride over 10 minutes. Meanwhile 204 g (2.0 mole) of acetic anhydride had been added to a stirred mixture of 116 g 1,6-hexanediamine and 200 ml of DMAC in a one liter three-necked flask under nitrogen. This product was now added over 2 minutes to the mixture in the five liter flask. The temperature of the bottom half of the spherical heating mantle surrounding the flask was set at 327°C (620°F) and the Variac controlling the top half was set at 30. After 140 minutes approximately 1150 ml of distillate had been collected and the temperature of the mantle was increased to 349°C (660°F). After stirring an additional 25 minutes under atmospheric pressure and 20 minutes under house vacuum 68 kPa (20 in Hg), 150 ml of additional distillate was collected and the polymer was cooled and ground. The polymer had an inherent viscosity of 0.42 (0.5% w/v) in 60:40 w/w phenol:tetrachloroethane @ 25°C. The polymer was solid state polymerized by heating 16 hours @ 471°F and 16 hours @ 268°C (515°F) under high vacuum 0.15—0.38 kPa (0.1 to 0.25 mm Hg). The inherent viscosity increased to 0.92. The mechanical properties for this polymer are given in Column 6 of Table IV.

Example 5 — Preparation of the 4:3:1
TMA:MBA:HMDA Polymer of Structural Class IV

A five liter three-necked flask equipped as in Example 1 was charged with 594 g (3.0 mole) of methylenebisaniline and 600 ml of DMAC. The nitrogen sparge (375 $cm^3$/min) and stirring were started and 204 g (2.0 mole) of acetic anhydride was added over 2 minutes. This was followed by the addition of 768 g (4.0 mole) of trimellitic anhydride over 10 minutes. Meanwhile 204 g (2.0 mole) of acetic anhydride had been added to a stirred mixture of 116 g 1,6-hexanediamine and 200 ml of DMAC in a one liter three-necked flask under nitrogen. This product was now added over 2 minutes to the mixture in the five liter flask. The temperature of the bottom half of the spherical heating mantle surrounding the flask was set at 327°C (620°F) and the Variac controlling the top half was set at 30. After 100 minutes approximately 1250 ml of distillate had been collected and the temperature of the mantle was increased to 366°C (690°F). After stirring an additional 50 minutes under atmospheric pressure and 17 minutes under house vacuum 68 kPa (20 in Hg), 70 ml of additional distillate was collected and the polymer was cooled and ground. The polymer had an inherent viscosity of 0.39 (0.5% w/v) in 60:40 w/w phenol:tetrachloroethane @ 25°C. The polymer was solid state polymerized by heating 15 hours @ 244°C (471°F) under high vacuum 0.38 kPa (0.25 mm Hg). The inherent viscosity increased to 0.99. The mechanical properties for this polymer are given in Column 2 of Table IV.

Example 6 — Preparation of the 4:3:1
TMA:MBA:MXDA Polymer of Structural Class V

A five liter three-necked flask, equipped with a variable speed, mechanical stirrer, nitrogen sparge tube on a pressure-equalizing addition funnel, and a distillation head and condenser was charged with 594 g (3.0 moles) methylenebisaniline and 700 ml of dimethylacetamide (DMAC). The nitrogen sparge and stirring were started and acetic anhydride 408 g (4.0 moles) was added over 2 minutes. Trimellitic anhydride 768 g (4.0 moles) was added over seven minutes. This was followed by the addition of 136 g (1.0 mole) of metaxylylenediamine in 100 ml of DMAC over a period of 2 minutes. The temperature of the spherical heating mantle surrounding the bottom half of the flask was set at 327°C (620°F) and the Variac controlling the top half was set at 30. After 72 minutes approximately 1040 ml had distilled and the temperature was then increased to 371°C (700°F). After 38 minutes more, 240 ml more distillate was collected and house vacuum 68 kPa (20 in Hg) was drawn on the system. After 5 minutes under vacuum about 20 ml of distillate was collected and the polymer had become extremely viscous. After cooling and grinding the polymer had an inherent viscosity of 0.37 dl/g in 60:40 w/w phenol:tetrachloroethane @ 25°C and 0.5% w/w concentration. The polymer was solid state polymerized by heating at 263°C (505°F) for 18 hours under high vacuum 8.25 kPa (0.55 mm Hg). The inherent viscosity increased to 0.81 dl/g in 60:40 w/w phenol:tetrachloroethane @ 25°C and 0.5% w/v concentration. The mechanical properties for this polymer are given in Column 4 of Table IV.

Example 7 — Preparation of the 4:3:1
TMA:MBA:MXDA Polymer of Structural Class IV

A five liter three-necked flask equipped as in Example 1 was charged with 594 g (3.0 mole) of methylenebisaniline and 600 ml of DMAC. The nitrogen sparge (375 $cm^3$/min) and stirring were started and 204 g (2.0 mole) of acetic anhydride was added over 10 minutes. This was followed by the addition of 768 g (4.0 mole) of trimellitic anhydride over 15 minutes. Meanwhile 204 g (2.0 mole) of acetic anhydride had been added to a stirred mixture of 136 g metaxylylenediamine and 200 ml of DMAC in a one liter three-necked flask under nitrogen. This product was now added over 1 minute to the mixture in the five liter flask. The temperature of the bottom half of the spherical heating mantle surrounding the flask was set at 327°C (620°F) and the Variac controlling the top half was set at 30. After 64 minutes approximately 1250 ml of distillate had been collected and the temperature of the mantle was increased to 354°C (670°F). After stirring an additional 10 minutes under atmospheric pressure and 25 minutes under house vacuum 68 kPa (20 in Hg), the polymer was cooled and ground. The polymer had an inherent viscosity of 0.40 (0.5% w/v) in 60:40 w/w phenol:tetrachloroethane @ 25°C. The polymer was solid state polymerized by heating 16 hours @ 249°C (480°F) and 16 hours @ 260°C (500°F) under high vacuum 0.2—0.75 kPa (0.15 to 0.50 mm Hg). The inherent viscosity increased to 0.62.

Example 8
Preparation of the 3:2:1
TMA:OBA:MXDA Polymer of Structural Class V.

A five liter three-necked flask, equipped with a variable speed, mechanical stirrer, nitrogen sparge tube on a pressure-equalizing addition funnel, and a distillation head and condenser was charged with 533.3 g (2.67 mole) of oxybisaniline and 700 ml of acetic acid. The nitrogen sparge (375 $cm^3$/min) and stirring were started and acetic anhydride, 408 g (4 moles) was added over 3 minutes. Trimellitic anhydride, 768 g (4.0 mole) was added over 2 minutes. This was followed by the addition of 181.3 g (1.33 mole) of metaxylylenediamine over 1 minute. The temperature of the bottom half of the spherical heating mantle surrounding the flask was set at 349°C (660°F) and the Variac controlling the top half was set at 30. After 24 minutes 360 ml of distillate had been collected and the temperature was raised to 357°C (675°F). After 65 minutes more an additional 640 ml of distillate had been collected; the polymer melt was quite thick, and the temperature was increased to 371°C (700°F). Stirring was continued for an additional 50 minutes under the nitrogen sparge (160 ml of distillate collected) and 10 minutes under house vacuum 68 KPa (20 in Hg). The polymer was then cooled under nitrogen and ground. The polymer had an inherent viscosity of 0.41 dl/g in 60:40 w/w phenol:tetrachloroethane @ 25°C and 0.5% w/v concentration. The polymer was solid state polymerized by heating under vacuum 0.6 KPa (0.40 mm Hg) for 16 hours 262°C @ (503°F) and 16 hours at 266°C (510°F). During this time the inherent viscosity of the polymer increased to 1.41.

Example 9
Preparation of 4:3:1
TMA:MBA:HMDA Polymer of Structural Class VII.

A five liter three-necked flask equipped as in Example 1 was charged with 116 g (1.00 mole) 1,6-hexanediamine, 594 g (3.0 mole) methylenebisaniline, and 800 ml DMAC. Acetic anhydride 408 g (40 mole) was added over 5 minutes. Trimellitic anhydride, 768 g (4.0 mole) was added over 10 minutes. The temperature of the bottom half of the spherical heating mantle surrounding the flask was set at 327°C (620°F) and the Variac controlling the top half was set at 30. After 65 minutes 1050 ml of distillate was collected and the temperature was increased to 354°C (670°F). Stirring was continued 40 minutes under the nitrogen sparge (250 ml of distillate collected) and 25 minutes under house vacuum 68 KPa (20 in Hg) 50 ml

of distillate collected. The polymer was then cooled under nitrogen and ground. The polymer had an inherent viscosity of 0.59 dl/g in 60:40 w/w phenol:tetrachloroethane @ 25°C and 0.5% w/v concentration. The polymer was solid state polymerized by heating under vacuum 0.2—0.75 KPa (015—0.50 mm Hg) for 16 hours 248°C @ (478°F) and 24 hours at 260°C @ (500°F). During this time the inherent viscosity increased to 0.91.

Example 10
Preparation of 4:3:1
TMA:MPDA:HMDA Polymer of Structural Class VII.

A five liter three-necked flask equipped as in Example 1 was charged with 116 g (1.00 mole) 1,6-hexanediamine, 324 g (3.0 mole) metaphenylenediamine, and 800 ml DMAC. Acetic anhydride 408 g (40 mole) was added over 5 minutes. Trimellitic anhydride, 768 g (4.0 mole) was added over 6 minutes. The temperature of the bottom half of the spherical heating mantle surrounding the flask was set at 327°C (620°F) and the Variac controlling the top half was set at 30. After 64 minutes 775 ml of distillate had been collected and the temperature was increased to 354°C (670°F). Stirring was continued for 45 minutes under the nitrogen sparge (465 ml of distillate collected) and 20 minutes under house vacuum 68 KPa (20 in Hg) 10 ml of distillate collected. The polymer was then cooled under nitrogen and ground. The polymer had an inherent viscosity of 0.49 dl/g in 60:40 w/w phenol:tetrachloroethane @ 25°C and 0.5% w/v concentration. The polymer was solid state polymerized by heating under vacuum 0.31 KPa (0.25 mm Hg) for 16 hours 270°C @ (518°F). During this time the inherent viscosity increased to 0.82.

Example 11
Preparation of the 3:2:1
Polymer of Trimellitic anhydride (TMA):metatoluenediamine (MTDA-80/20 mixture of 2,4/2,6 isomers):1,6-hexanediamine (HMDA) of Structural Class V using 50% acetylation of total amine functionality.

A mixture of 325 g (2.67 mole of MTDA and 555 g of acetic acid was placed in a five liter 3-necked flask equipped with a metal stirrer, addition funnel with nitrogen inlet, and distillation takeoff and condenser. The system was flushed with $N_2$ at 375 $cm^3$/min. Acetic anhydride 408 g (40 mole) was added rapidly over a few minutes. This was followed by the addition of 768 g (4.0 mole) of TMA. Finally 155 g (1.33 mole) of HMDA was added over a few minutes. The temperature of the bottom half of the spherical heating mantle surrounding the flask was set at 371°C (700°F) and the Variac controlling the top half was set at 40. After 75 minutes of heating and stirring, approximately 980 ml of distillate had been collected and the molten prepolymer was fairly thick. Heating and stirring were continued for 22 minutes more under 20000 Pa (150 torr) absolute. The thick viscous polymer was then cooled and ground. The inherent viscosity of the polymer was 0.25 at a concentration of 0.5% w/v in N-methylpyrrolidone (NMP) at 25°C. The polymer was solid state polymerized at 249°C (480°F) under high vacuum of 400 Pa (3.0 torr) and reground. The inherent viscosity increased to 0.44. A repeat of the solid state polymerization 249°C (480°F, overnight, 0.37 KPa (0.25 torr) increased the inherent viscosity to 0.81 (some gel particles present).

Example 12
Preparation of the 3:2:1
Polymer of TMA:MTDA:HMDA of Structural Class V using Total Acetylation of Aromatic Diamine Functionality

The procedure was similar to Example 11 except 2 moles of acetic anhydride were used to acetylate each mole of MTDA. The inherent viscosity of the final product was 0.65.

Example 13
Preparation of the 3:2:1
Polymer of TMA:MTDA:HMDA of Structural Class VII using 50% Acetylation of Total Amine Functionality

The procedure was similar to that of Example 11 except that the 408 g of acetic anhydride was added to a mixture of the MTDA and HMDA prior to the TMA addition. The inherent viscosity of the final product was 0.69

Example 14
Preparation of the 3:2:1
Polymer of TMA:MTDA:HMDA of Structural Class VII using 90% Acetylation of Total Amine Functionality

The procedure was similar to that of Example 13 except 1.8 moles of acetic anhydride per mole of diamine was added to the mixture of MTDA and HMDA. The inherent viscosity of the final product was 0.88.

TABLE V
Mechanical Properties of 3:2:1
TMA:MTDA:HMDA Copolymers

| Polymer Class | | V | V | VII | VII |
|---|---|---|---|---|---|
| Acetylation level | | 50 | 67 | 50 | 90 |
| Tensile Strength MPa (psi) | D—638 | 142 (20,600) | 141 (20,400) | 142 (20,600) | 123 (17,900) |
| Elongation at Break, % | D—638 | 10.1 | 12.1 | 11.4 | 8.1 |
| Flexural Strength MPa (psi) | D—790 | 201 (29,100 | 200 (29,000) | 197 (28,600) | 195 (28,300) |
| Flexural Modulus MPa (psi) | D—790 | 3819 (554,000 | 3826 (555,000) | 3737 (542,000) | 3820 (554,000) |
| Izod Impact J/m (ft lb/in notch) | D—256 | 55.0 (1.03) | 47.0 (0.88) | 62.5 (1.17) | 59.8 (1.12) |
| Tensile Impact KJ/m² (ft lb/in²) | D—1822 | 75.5 (35.9) | 49.8 (23.7) | 164.5 (78.2) | 81.2 (38.6) |
| HDT at 1.8 MPa (264 psi) °C (°F) | D—648 | 221 (429) | 214 (417) | 219 (427) | 217 (413) |
| Example | | 11 | 12 | 13 | 14 |

TABLE VI
Effect of thermal aging 240°C (400°F) in air on the physical properties of the 3:2:1 TMA:MTDA:HMDA polyer structural class VII

| | Control | 100 h | 200h | 500 h | 1000 h |
|---|---|---|---|---|---|
| Tensile Strength MPa (psi) | 142 (20,600 | 155 (22,500) | 154 (22,300) | 77.9 (11,300) | 53.5 (7,770) |
| Elongation at Break % | 11.4 | 9.9 | 9.1 | 3.4 | 2.2 |
| Flexural Strength MPa (psi) | 197 (28,600) | — | — | — | 77.9 (11,300) |
| Flexural Modulus MPa (psi) | 3737 (542,000) | — | — | — | 3764 (546,000) |
| Tensile Impact KJ/$m^2$ (ft lb/$in^2$) | 164.4 (78.2) | 86.0 (40.9) | 59.5 (28.3) | 37.9 (18.0) | 16.6 (7.9) |
| Izod J/m (ft lb/in notch) | 62.5 (1.17) | — | — | — | 9.6 (0.18) |
| HDT 1.8 MPa (264 psi) °C (°F) | 219 (427) | — | — | — | 235 (455) |

TABLE VI (continued)
Structural Class V

| | Control | 100 h | 200h | 500 h | 1000 h |
|---|---|---|---|---|---|
| Tensile Strength MPa (psi) | 142 (20,600 | 152 (22,000) | 133 (19,300) | 154 (22,300) | 139 (20,200) |
| Elongation at Break % | 10.1 | 10.9 | 8.5 | 10.1 | 8.1 |
| Flexural Strength MPa (psi) | 201 (29,100) | — | — | — | 201 (29,100) |
| Flexural Modulus MPa (psi) | 3820 (554,000) | — | — | — | 3723 (540,000) |
| Tensile Impact $KJ/m^2$ (ft $lb/in^2$) | 75.5 (35.9) | 73.8 (35.1) | 102.8 (48.9) | 55.3 (26.3) | 49.6 (23.6) |
| Izod J/m (ft lb/in notch) | 55.0 (1.03) | — | — | — | 35.8 (0.67) |
| HDT 1.8 MPa (264 psi) °C (°F) | 221 (429) | — | — | — | 237 (458) |

**Claims**

1. A process for the preparation of a tailored linear injection moldable polyamide-imide copolymer or terpolymer containing both aromatic and aliphatic moieties derived from aromatic and aliphatic diamines, which process comprises reacting at a temperature of 10 to 371°C (50 to 700°F) at least one fully or partially acylated aromatic or aliphatic diamine or a mixture of fully or partially acylated aromatic and aliphatic diamines with at least one tricarboxylic acid anhydride compound and at least one aliphatic or aromatic diamine or a mixture of aromatic and aliphatic diamines wherein the ratio of the total moles of fully, partially acylated and unacylated diamines of tricarboxylic acid anhydride compound is about 1:1 and 40 to 100% of the total amine functionality is acylated.

2. A process according to claim 1, wherein the molar ratio of all acylated and unacylated aromatic diamines to all acylated and unacylated aliphatic diamines is 1:1 to 9:1 and wherein the amine functionality is reacted with the tricarboxylic acid anhydride compound prior to reaction of the acylated amine functionality.

3. A process according to Claim 1, wherein the tricarboxylic acid anhydride compound is trimellitic anhydride.

4. A process according to any preceding claim, wherein at least one fully acylated aliphatic diamine or a mixture of fully acylated aromatic and aliphatic diamines is reacted with at least one tricarboxylic acid anhydride compound and at least one aromatic diamine wherein the molar ratio of acylated diamine:tricarboxylic acid anhydride compound:aromatic diamine is 5:10:5 wherein the copolymer produced comprises the following structural units:

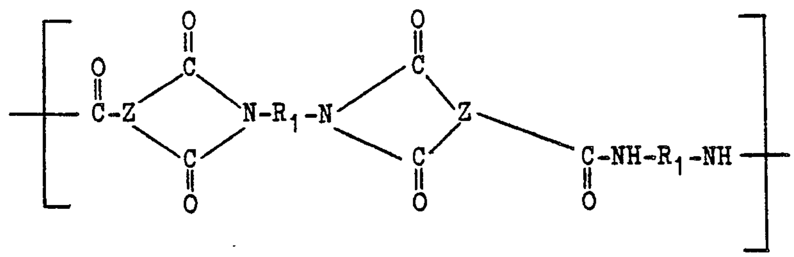

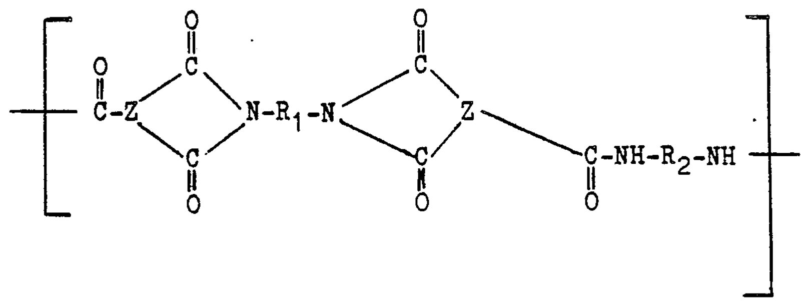

wherein "Z" is a trivalent aromatic radical, $R_1$ is a divalent aromatic radical containing 6 to 20 carbon atoms said aromatic radical comprising a single aromatic nucleus or two such nuclei joined directly or via stable linkages selected from —S—, —O—,

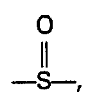

—$SO_2$, —CO— or methylene radicals and $R_2$ is a divalent aliphatic, cycloaliphatic or araliphatic radical of from 2 to 18 carbon atoms.

5. A process according to any of Claims 1 to 3, wherein at least one fully acylated aromatic diamine is reacted with at least one tricarboxylic acid anhydride compound and at least one aliphatic diamine or mixture of aliphatic and aromatic diamines wherein the molar ratio of acylated diamine:tricarboxylic acid anhydride compound:aliphatic and aromatic diamine is 5:10:5 wherein the copolymer produced comprises the following

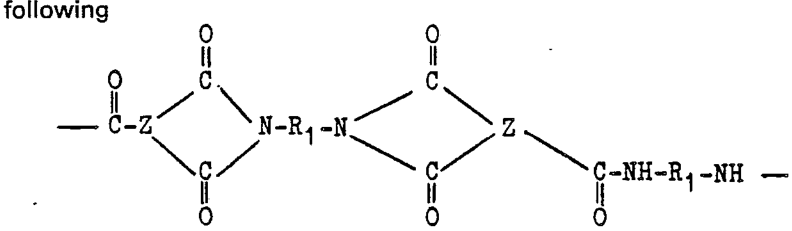

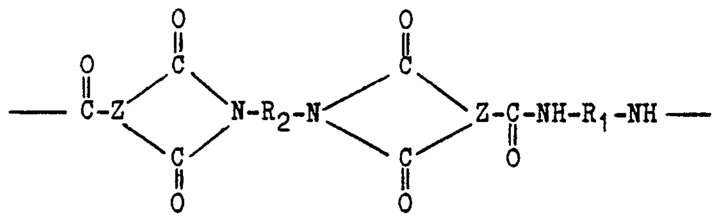

wherein Z, $R_1$ and $R_2$ are as defined in Claim 4.

6. A process according to any of Claims 1 to 3, wherein fully acylated aromatic and aliphatic diamines are reacted with at least one tricarboxylic acid anhydride compound and aliphatic and aromatic diamines wherein the molar ratio of acylated diamine:tricarboxylic acid anhydride compound:aliphatic and aromatic diamine is 5:10:5 wherein the copolymer produced comprises the following structural units:

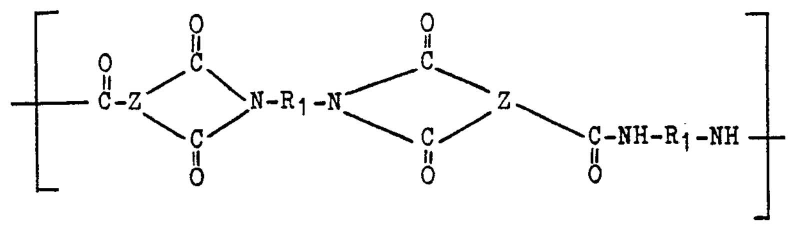

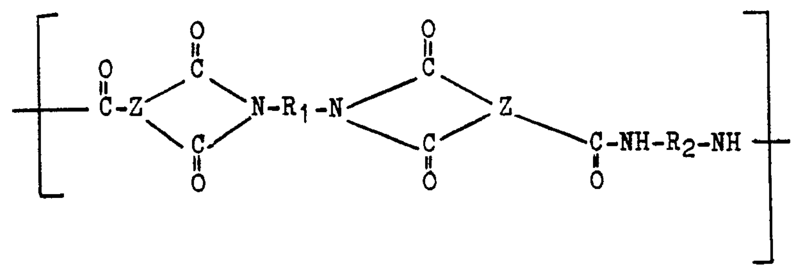

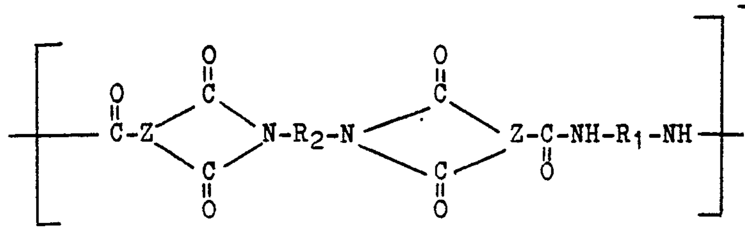

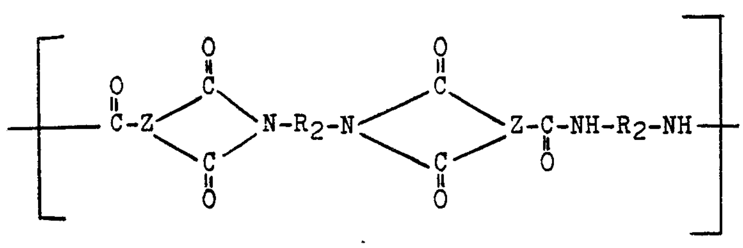

wherein "Z", $R_1$ and $R_2$ are as defined in Claim 4.

7. A process according to any of Claims 1 to 4, wherein a mixture of fully or partially acylated aromatic and fully acylated aliphatic diamines is reacted with at least one tricarboxylic acid anhydride compound and at least one aromatic diamine wherein about one half of the total amine functionality is acylated wherein the copolymer produced comprises the following structural units:

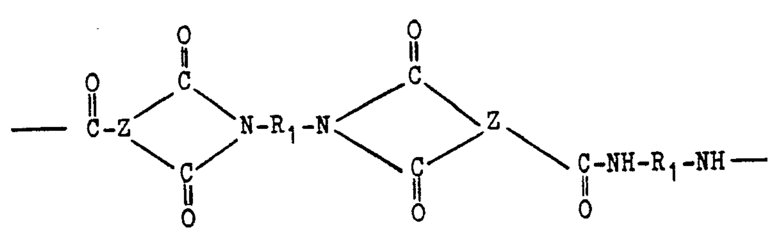

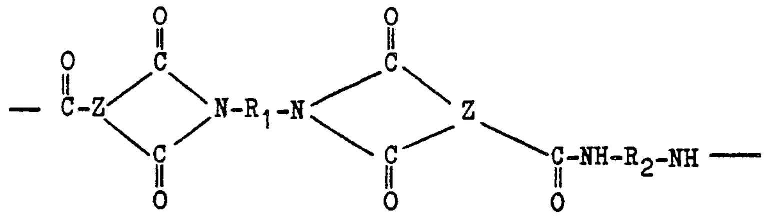

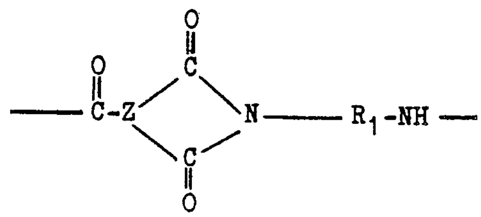

wherein "Z", $R_1$ and $R_2$ are as defined in Claim 4.

8. A process according to any of Claims 1 to 3, wherein at least one fully or partially acylated aromatic diamine is reacted with at least one tricarboxylic acid anhydride compound and at least one aliphatic diamine or a mixture of aliphatic and aromatic diamines wherein at least one half of the total amine functionality is acylated wherein the copolymer produced comprises the following structural units:

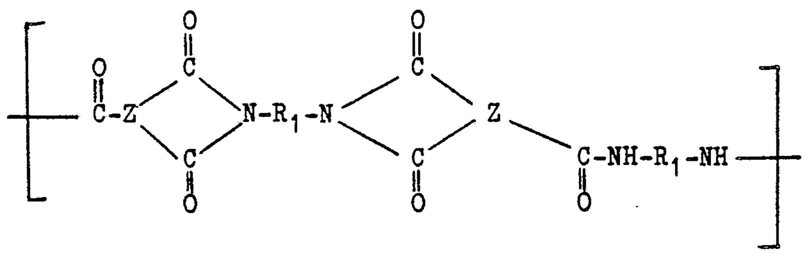

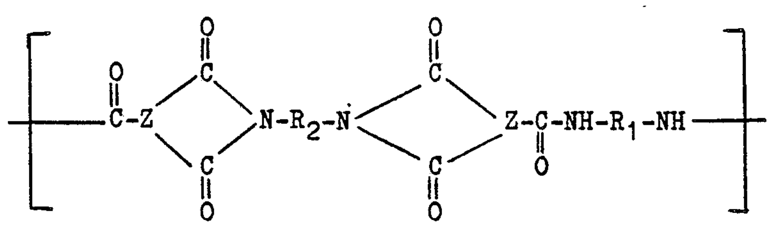

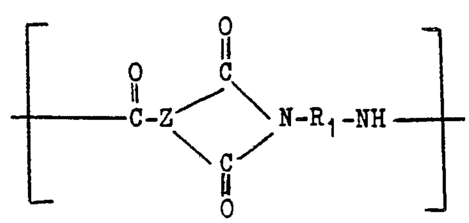

wherein "Z", $R_1$ and $R_2$ are as defined in Claim 4.

9. A process according to any of Claims 1 to 4, wherein at least one fully or partially acylated aromatic diamine and at least one fully acylated aliphatic diamine are reacted with at least one tricarboxylic acid anhydride compound and aliphatic and aromatic diamines wherein about one half of the total amine functionality is acylated wherein the copolymer produced comprises following structural units:

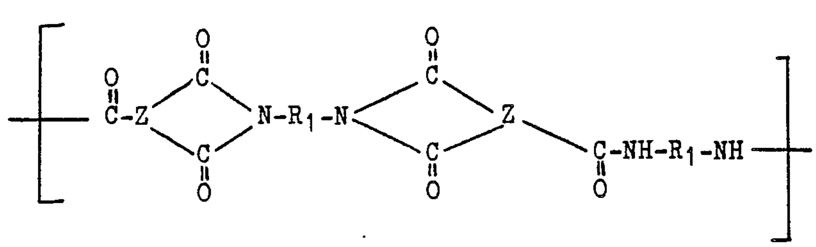

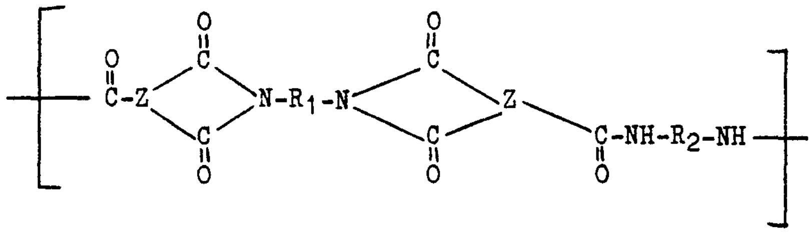

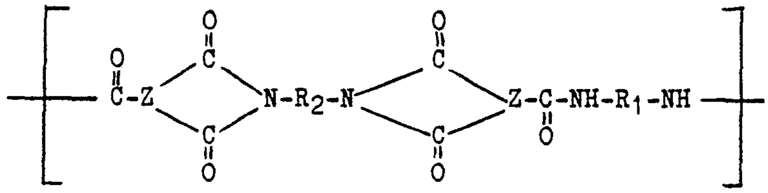

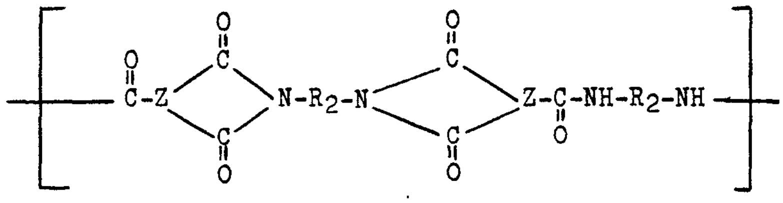

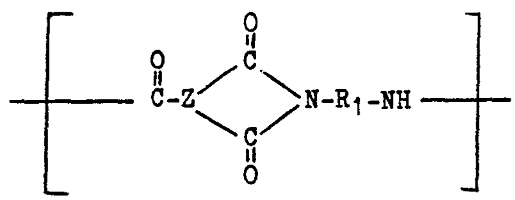

wherein "Z", $R_1$ and $R_2$ are as defined in Claim 4.

10. A process according to any of Claims 1 to 3, wherein fully or partially acylated aromatic and aliphatic diamines are reacted with at least one tricarboxylic acid anhydride compound wherein 50 to 100% of the total amine functionality is acylated and the copolymer produced comprises the following structural units:

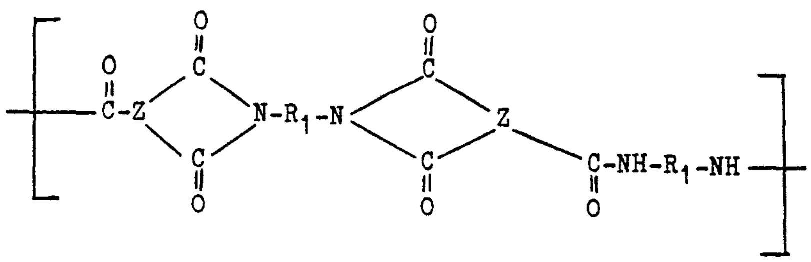

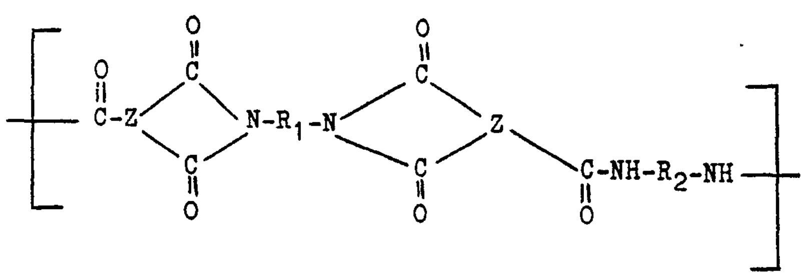

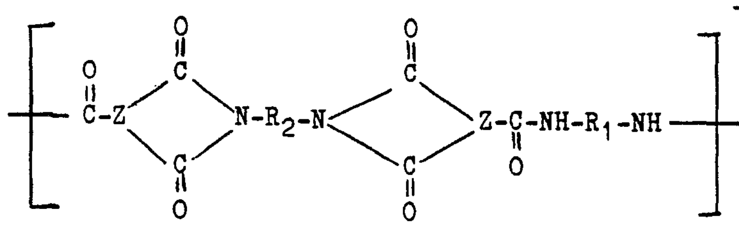

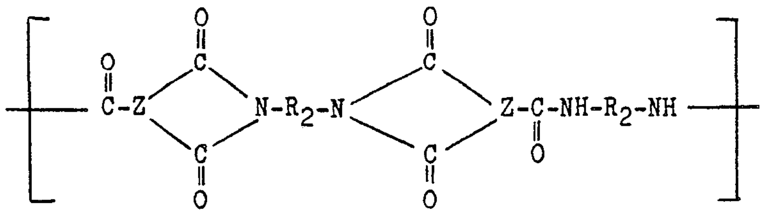

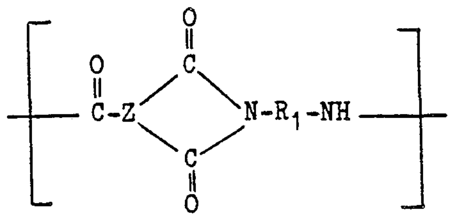

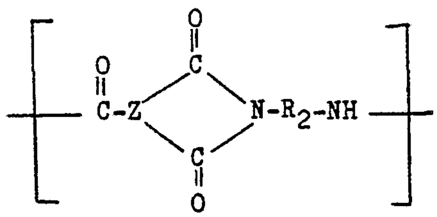

wherein "Z", $R_1$ and $R_2$ are as defined in Claim 4.

11. A process according to Claim 8, wherein "Z" is

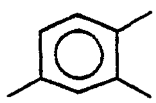

$R_1$ is

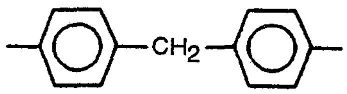

and $R_2$ is

$—(CH_2)_6—$

and wherein the molar ratio of $Z:R_1:R_2$ is 4:3:1.

12. A process according to Claim 8, wherein "Z" is

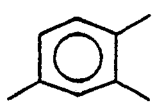

$R_1$ is

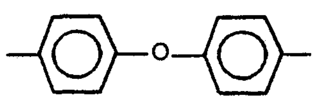

and $R_2$ is

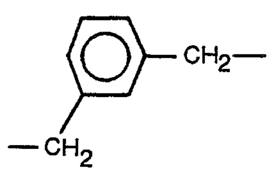

and wherein the molar ratio of $Z:R_1:R_2$ is 3:2:1.

13. A process according to Claim 4, wherein "Z" is

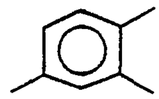

$R_1$ is

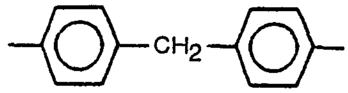

and $R_2$ is

$$-(CH_2)_6-$$

and wherein the molar ratio of $Z:R_1:R_2$ is 4:3:1.

14. A process according to Claim 7, wherein "Z" is

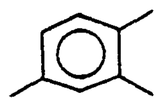

$R_1$ is

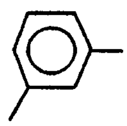

and $R_2$ is

$$-(CH_2)_6-$$

and wherein the molar ratio of $Z:R_1:R_2$ is 4:3:1.

15. A process according to Claim 8, wherein "Z" is

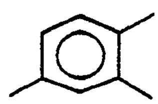

$R_1$ is

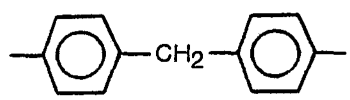

and $R_2$ is

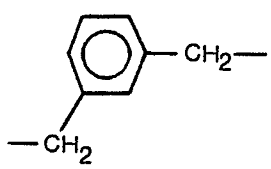

and wherein the molar ratio of $Z:R_1:R_2$ is 4:3:1.

16. A process according to Claim 7, wherein "Z" is

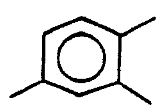

$R_1$ is

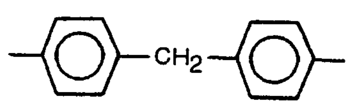

and $R_2$ is

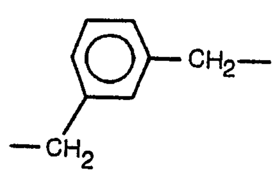

and wherein the molar ratio of $Z:R_1:R_2$ is 4:3:1.

17. A process according to Claim 10, wherein "Z" is

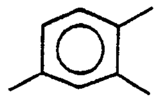

$R_1$ is

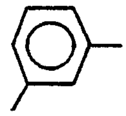

and $R_2$ is

$—(CH_2)_6—$

and wherein the molar ratio of $Z:R_1:R_2$ is 4:3:1.

18. A process according to Claim 8, wherein "Z" is

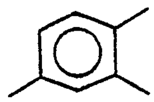

$R_1$ is

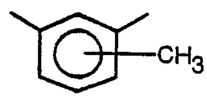

and $R_2$ is

$—(CH_2)_6—$

19. A process according to Claim 10, wherein "Z" is

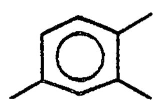

$R_1$ is

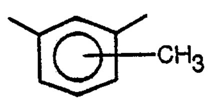

and $R_2$ is

$—(CH_2)_6—$

20. A copolymer or terpolymer produced according to any preceding claim.

21. A copolymer or terpolymer produced according to any preceding claim in the form of a molded object.

**Patentansprüche**

1. Verfahren zur Herstellung eines maßgeschneiderten linearen spritzgießbaren Polyamid-Imid-Copolymerisats oder Terpolymerisats, das sowohl aromatische als auch aliphatische Bausteine enthält, die von aromatischen und aliphatischen Diaminen abgeleitet sind, dadurch gekennzeichnet, daß man bei einer Temperatur von 10 bis 371°C wenigstens ein vollständig oder teilweise acyliertes aromatisches oder aliphatisches Diamin oder ein Gemisch aus vollständig oder teilweise acylierten aromatischen und aliphatischen Diaminen mit wenigstens einem Tricarbonsäureanhydrid und wenigstens einem aliphatischen oder aromatischen Diamin oder einem Gemisch aus aromatischen und aliphatischen Diaminen umsetzt, wobei das Verhältnis aus dem gesamten Molen an vollständig oder teilweise acylierten und nicht acylierten Diaminen und dem Tricarbonsäureanhydrid etwa 1:1 beträgt und 40 bis 100% der gesamten Aminfunktionalität acyliert werden.

2. Verfahren nach Anspruch 1, dadurch gekennzeichnet, daß das Molverhältnis aus allen acylierten und nicht acylierten aromatischen Diaminen und allen acylierten und nicht acylierten aliphatischen Diaminen 1:1 bis 9:1 beträgt und die Aminfunktionalität mit dem Tricarbonsäureanhydrid vor der Umsetzung der acylierten Aminfunktionalität zur Reaktion gebracht wird.

3. Verfahren nach Anspruch 1, dadurch gekennzeichnet, daß das Tricarbonsäureanhydrid Trimellithsäureanhydrid ist.

4. Verfahren nach irgendeinem der vorhergehenden Ansprüche, dadurch gekennzeichnet, daß man wenigstens ein vollständig acyliertes aliphatisches Diamin oder ein Gemisch aus vollständig acylierten aromatischen und aliphatischen Diaminen mit wenigstens einem Tricarbonsäureanhydrid und wenigstens einem aromatischen Diamin umsetzt, wobei das Molverhältnis von acyliertem Diamin zu Tricarbonsäureanhydrid zu aromatischem Diamin 5:10:5 beträgt und das so erzeugte Copolymerisat die folgenden Struktureinheiten aufweist

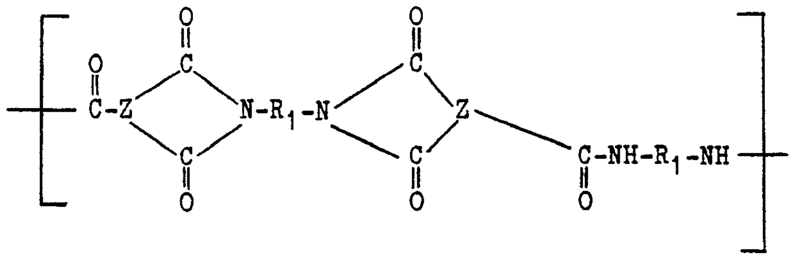

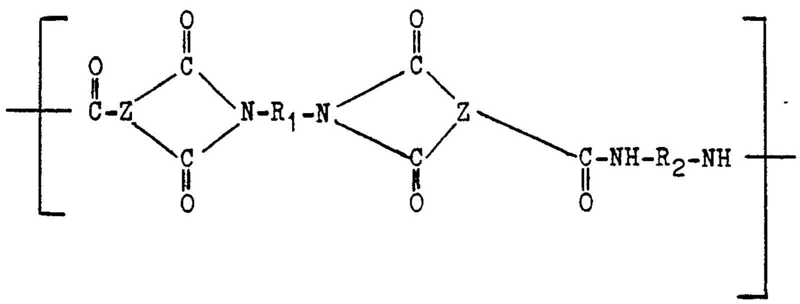

worin Z ein dreiwertiger aromatischer Rest ist, $R_1$ ein zweiwertiger aromatischer Rest ist, der 6 bis 20 Kohlenstoffatome enthält, wobei dieser aromatische Rest einen einzelnen aromatischen Kern oder zwei solche Kerne aufweist, die direkt oder über stabile Brücken miteinander verbunden sind, welche ausgewählt sind aus

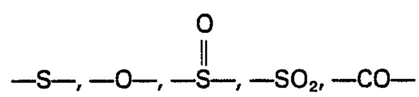

oder Methylenresten, und $R_2$ ein zweiwertiger aliphatischer, cycloaliphatischer oder araliphatischer Rest mit 2 bis 18 Kohlenstoffatomen ist.

5. Verfahren nach irgendeinem der Ansprüche 1 bis 3, dadurch gekennzeichnet, daß man wenigstens ein vollständig acyliertes aromatisches Diamin mit wenigstens einem Tricarbonsäureanhydrid und wenigstens einem aliphatischen Diamin oder einem Gemisch aus aliphatischen und aromatischen Diaminen umsetzt, wobei das Molverhältnis von acyliertem Diamin zu Tricarbonsäureanhyrid zu aliphatischem und aromatischem Diamin 5:10:5 beträgt und das so erzeugte Copolymerisat die folgenden Struktureinheiten aufweist

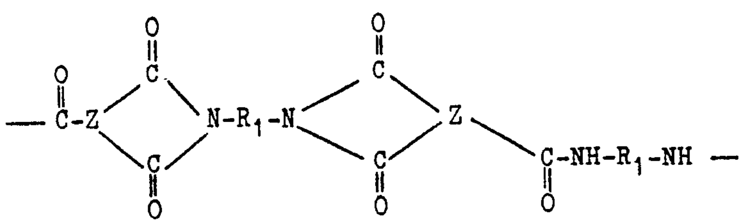

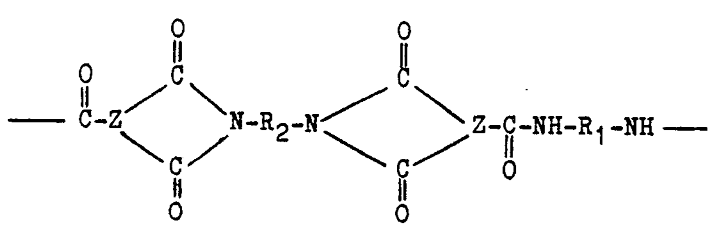

worin Z, $R_1$ und $R_2$ wie im Anspruch 4 definiert sind.

6. Verfahren nach irgendeinem der Ansprüche 1 bis 3, dadurch gekennzeichnet, daß man vollständig acylierte aromatische und aliphatische Diamine mit wenigstens einem Tricarbonsäureanhydrid und aliphatischen und aromatischen Diaminen umsetzt, wobei das Molverhältnis von acyliertem Diamin zu Tricarbonsäureanhydrid zu aliphatischem und aromatischem Diamin 5:10:5 beträgt und das so erzeugte Copolymerisat die folgenden Struktureinheiten aufweist

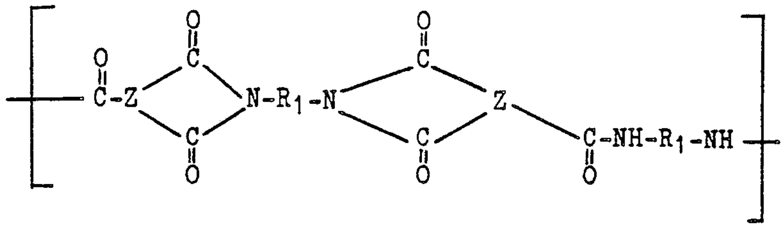

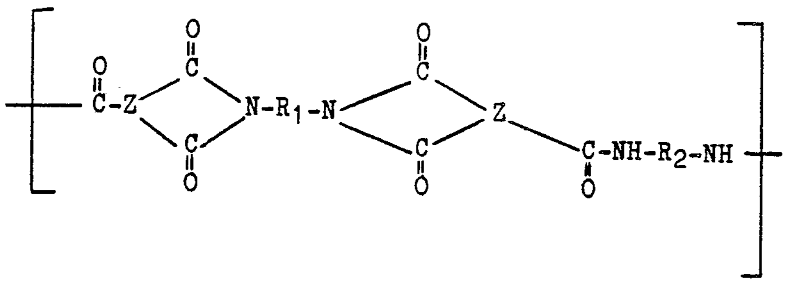

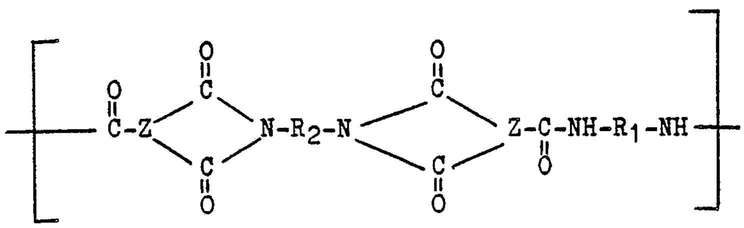

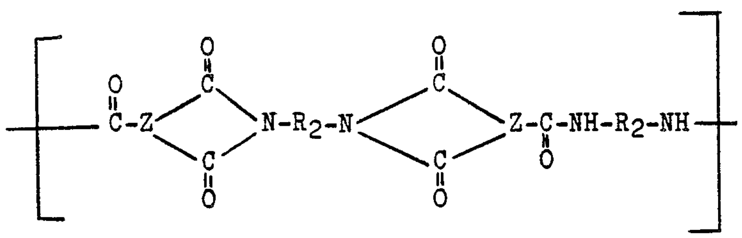

worin Z, $R_1$ und $R_2$ wie im Anspruch 4 definiert sind.

7. Verfahren nach irgendeinem der Ansprüche 1 bis 4, dadurch gekennzeichnet, daß man ein Gemisch aus vollständig oder teilwise acylierten aromatischen und vollständig acylierten aliphatischen Diaminen mit wenigstens einem Tricarbonsaureanhydrid und wenigstens einem aromatischen Diamin umsetzt, wobei etwa eine Hälfte der gesamten Aminfunktionalität acyliert wird und das so erzeugte Copolymerisat die folgenden Struktureinheiten aufweist

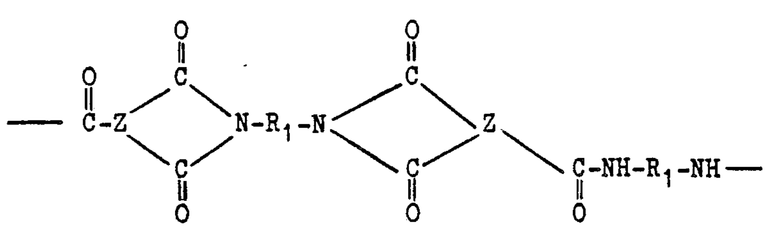

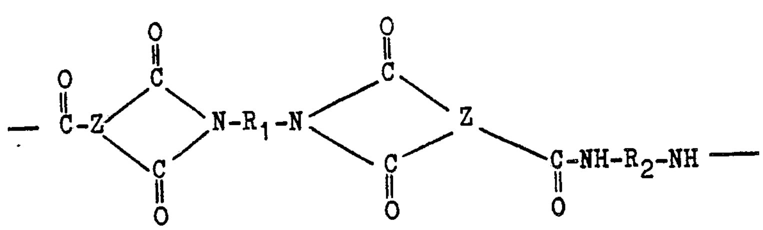

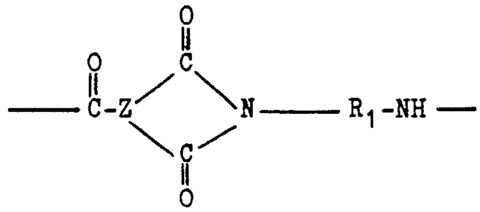

worin Z, $R_1$ und $R_2$ wie im Anspruch 4 definiert sind.

8. Verfahren nach irgendeinem der Ansprüche 1 bis 3, dadurch gekennzeichnet, daß man wenigstens ein vollständig oder teilweise acyliertes aromatisches Diamin mit wenigstens einem Tricarbonsäureanhydrid und wenigstens einem aliphatischen Diamin oder einem Gemisch aus aliphatischen und aromatischen Diaminen umsetzt, wobei wenigstens eine Hälfte der gesamten Aminfunktionalität acyliert wird und das so erzeugte Copolymerisat die folgenden Struktureinheiten aufweist

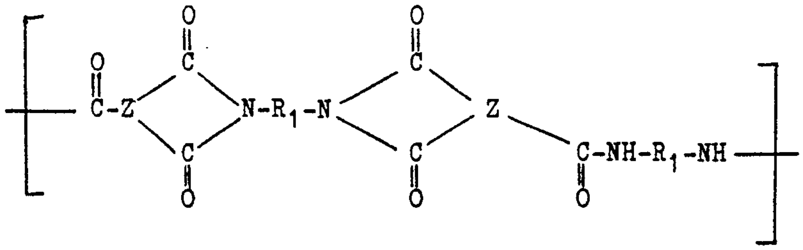

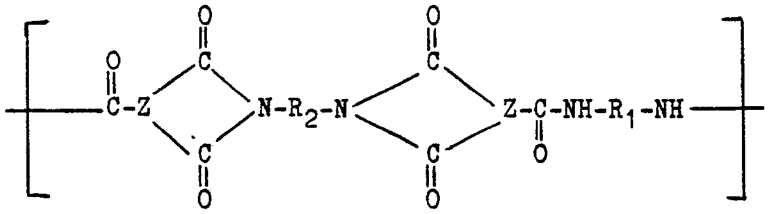

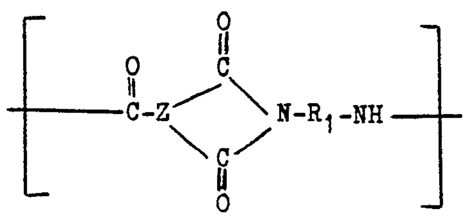

worin Z, $R_1$ und $R_2$ wie im Anspruch 4 definiert sind.

9. Verfahren nach irgendeinem der Ansprüche 1 bis 4, dadurch gekennzeichnet, daß man wenigstens ein vollständig oder teilweise acyliertes aromatisches Diamin und wenigstens ein vollständig acyliertes aliphatisches Diamin mit wenigstens einem Tricarbonsäureanhydrid und aliphatischen Diaminen umsetzt, wobei etwa eine Hälfte der gesamten Aminfunktionalität acyliert wird und das so erzeugte Copolymerisat die folgenden Struktureinheiten aufweist

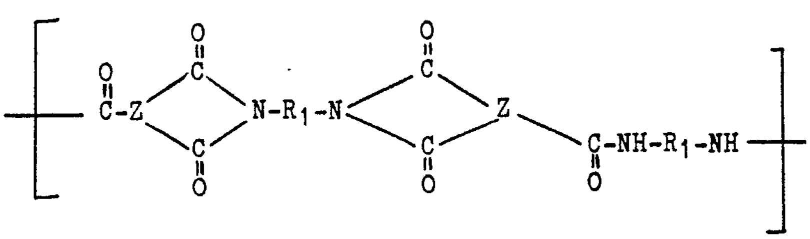

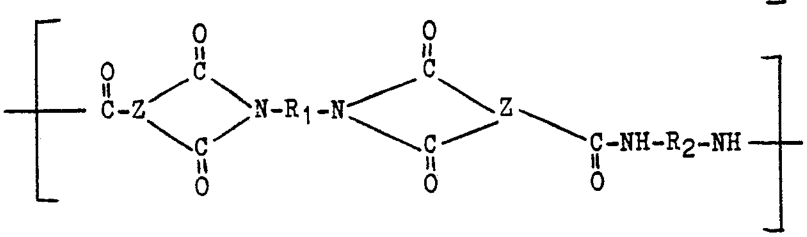

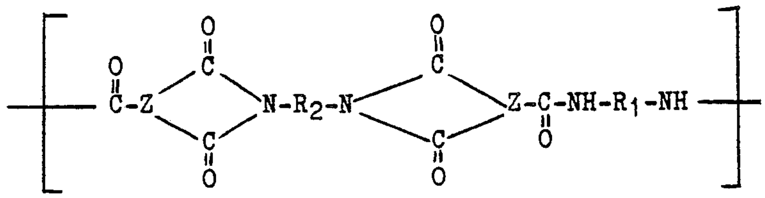

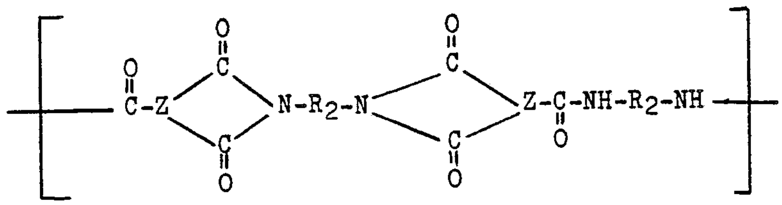

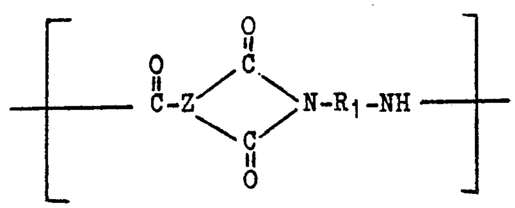

worin Z, $R_1$ und $R_2$ wie im Anspruch 4 definiert sind.

10. Verfahren nach irgendeinem der Ansprüche 1 bis 3, dadurch gekennzeichnet, daß man vollständig oder teilweise acylierte aromatische und aliphatische Diamine mit wenigstens einem Tricarbonsäureanhydrid umsetzt, wobei 50 bis 100% der gesamten Aminfunktionalität acyliert werden und das so erzeugte Copolymerisat die folgenden Struktureinheiten aufweist

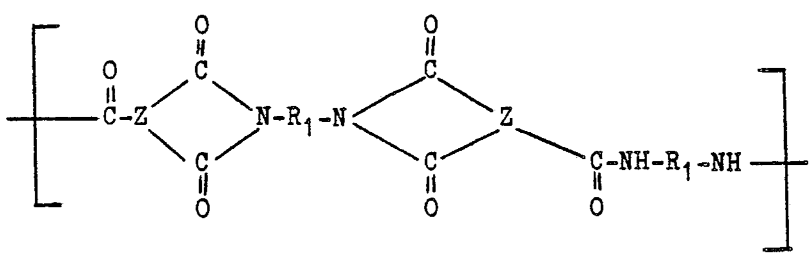

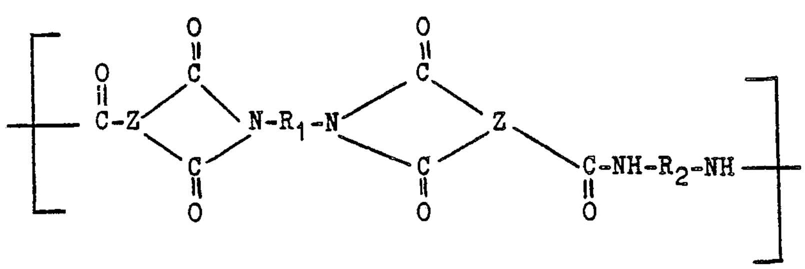

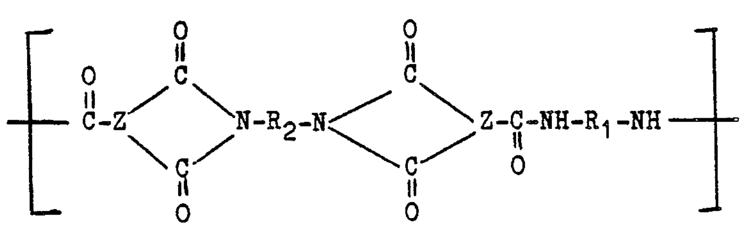

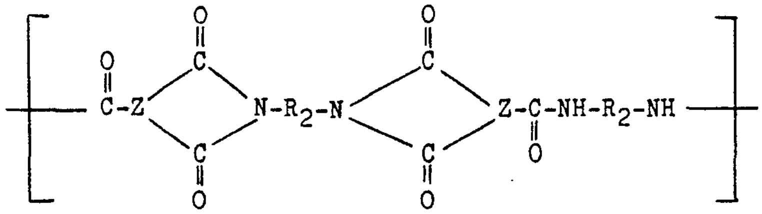

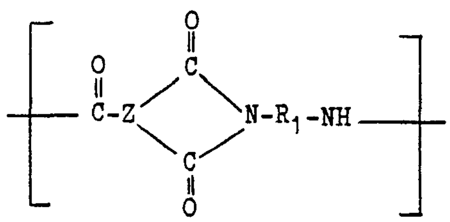

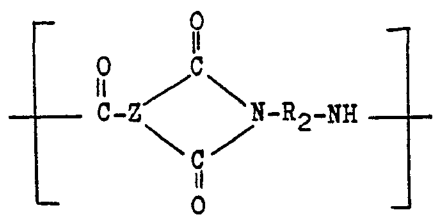

worin Z, $R_1$ und $R_2$ wie im Anspruch 4 definiert sind.

11. Verfahren nach Anspruch 8, dadurch gekennzeichnet, daß Z für

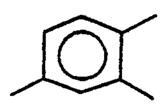

steht, $R_1$ für

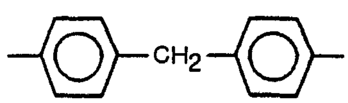

steht und $R_2$ für

$$-(CH_2)_6-$$

steht und das Molverhältnis von $Z:R_1:R_2$ 4:3:1 beträgt.

12. Verfahren nach Anspruch 8, dadurch gekennzeichnet, daß Z für

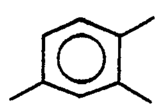

steht, $R_1$ für

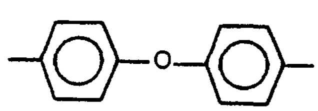

steht und $R_2$ für

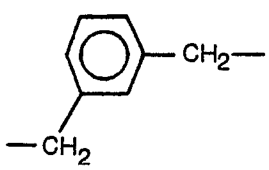

steht und das Molverhältnis von $Z:R_1:R_2$ 3:2:1 beträgt.

13. Verfahren nach Anspruch 4, dadurch gekennzeichnet, daß Z für

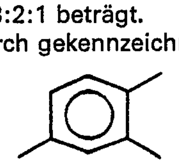

steht, $R_1$ für

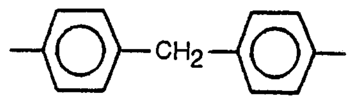

steht und $R_2$ für

$—(CH_2)_6—$

steht und das Molverhältnis von $Z:R_1:R_2$ 4:3:1 beträgt.

14. Verfahren nach Anspruch 7, dadurch gekennzeichnet, daß Z für

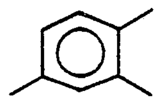

steht, $R_1$ für

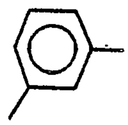

steht und $R_2$ für

$—(CH_2)_6—$

steht und das Molverhältnis von $Z:R_1:R_2$ 4:3:1 beträgt.

15. Verfahren nach Anspruch 8, dadurch gekennzeichnet, daß Z für

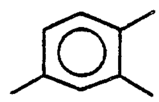

steht, $R_1$ für

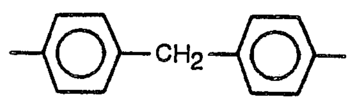

steht und $R_2$ für

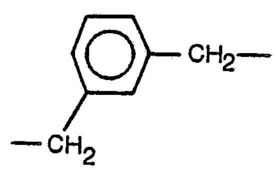

steht und das Molverhältnis von $Z:R_1:R_2$ 4:3:1 beträgt.

16. Verfahren nach Anspruch 7, dadurch gekennzeichnet, daß Z für

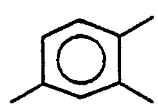

steht, $R_1$ für

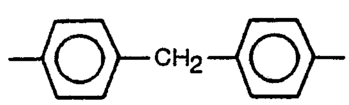

steht und $R_2$ für

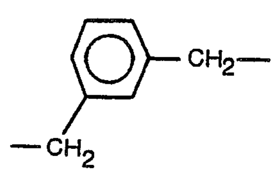

steht und das Molverhältnis von $Z:R_1:R_2$ 4:3:1 beträgt.

17. Verfahren nach Anspruch 10, dadurch gekennzeichnet, daß Z für

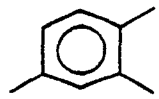

steht, $R_1$ für

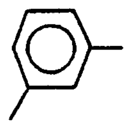

steht und $R_2$ für

$-(CH_2)_6-$

steht und das Molverhältnis von $Z:R_1:R_2$ 4:3:1 beträgt.

18. Verfahren nach Anspruch 8, dadurch gekennzeichnet, daß Z für

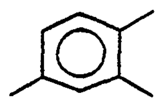

steht, $R_1$ für

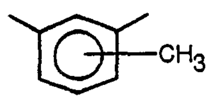

steht und $R_2$ für

$-(CH_2)_6-$

steht.

19. Verfahren nach Anspruch 10, dadurch gekennzeichnet, daß Z für

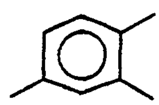

steht, $R_1$ für

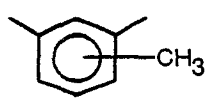

steht und $R_2$ für

$-(CH_2)_6-$

steht.

20. Copolymerisat oder Terpolymerisat, dadurch gekennzeichnet, daß es nach irgendeinem der vorhergehenden Ansprüche hergestellt worden ist.

21. Copolymerisat oder Terpolymerisat, dadurch gekennzeichnet, daß es nach irgendeinem der vorhergehenden Ansprüche hergestellt worden ist und die Form eines geformten Gegenstands hat.

**Revendications**

1. Un procédé pour la préparation d'un copolymère ou terpolymère de polyamide-imide linéaire "sur mesure" moulable par injection contenant des fragments aromatiques et des fragments aliphatiques dérivés de diamines aromatiques et aliphatiques, lequel procédé comprend la réaction à une température de 10 à 371°C (50 à 700°F) d'au moins une diamine aromatique ou aliphatique totalement ou partiellement acylée ou d'un mélange de diamines aromatiques et aliphatiques totalement ou partiellement acylées avec au moins un composé de type anhydride d'acide tricarboxylique et au moins une diamine aliphatique ou aromatique ou un mélange de diamines aromatiques et aliphatiques où le rapport des moles totales des diamines totalement acylées, partiellement acylées et non acylées au composé de type anhydride d'acide tricarboxylique est d'environ 1/1 et 40 à 100% de la fonctionnalité amine totale sont acylés.

2. Un procédé selon la revendication 1 dans lequel le rapport molaire de toutes les diamines aromatiques acylées et non acylées à toutes les diamines aliphatiques acylées et non acylées est de 1/1 à 9/1 et où la fonctionnalité amine est mise à réagir avec le composé de type anhydride d'acide tricarboxylique avant la réaction de la fonctionnalité amine acylée.

3. Un procédé selon la revendication 1 dans lequel le composé de type anhydride d'acide tricarboxylique est l'anhydride trimellitique.

4. Un procédé selon l'une quelconque des revendications précédentes, dans lequel au moins une diamine aliphatique totalement acylée ou un mélange de diamines aromatiques et aliphatiques totalement acylées est mis à réagir avec au moins un composé de type anhydride d'acide tricarboxylique et au moins une diamine où le rapport molaire diamine acylée/composé de type anhydride tricarboxylique/diamine aromatique est de 5/10/1 où le copolymère produit comprend les motifs structuraux suivants:

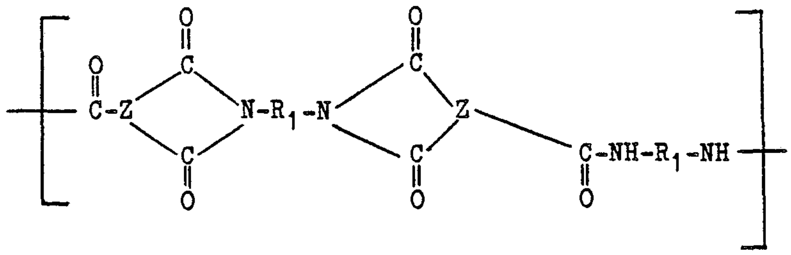

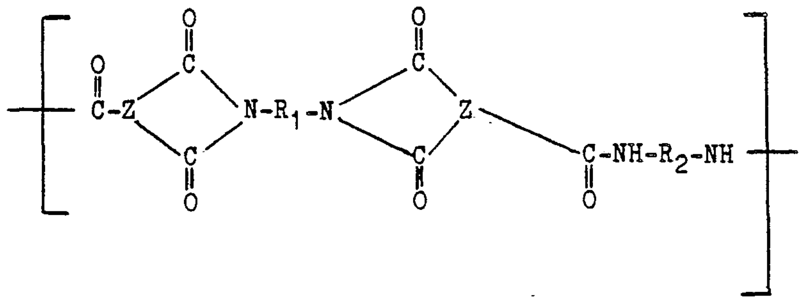

où "Z" est un radical aromatique trivalent, $R_1$ est un radical aromatique divalent contenant 6 à 20 atomes de carbone, ledit radical aromatique comprenant un noyau aromatique unique ou deux de ces noyaux unis directement ou par des liaisons stables choisies parmi

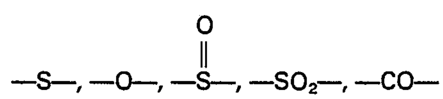

ou méthylène et $R_2$ est un radical divalent aliphatique, cycloaliphatique ou araliphatique de 2 à 18 atomes de carbone.

5. Un procédé selon l'une quelconque des revendications 1 à 3 dans lequel au moins une diamine aromatique totalement acylée est mise à réagir avec au moins un composé de type anhydride tricarboxylique et au moins une diamine aliphatique ou un mélange de diamines aliphatiques et aromatiques où le rapport molaire diamine acylée/composé de type anhydride d'acide tricarboxylique/diamines aliphatiques et aromatiques est de 5/10/15 où le copolymère produit comprend ce qui suit:

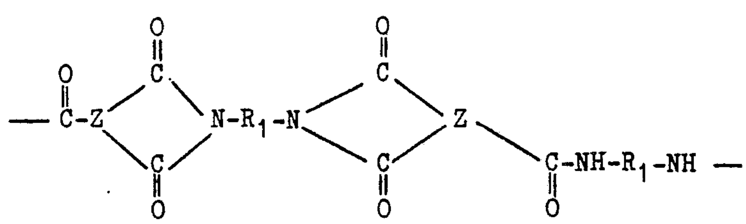

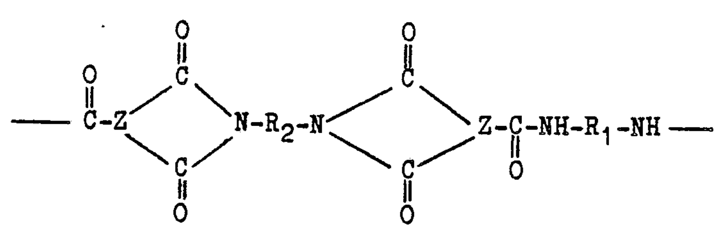

où Z, $R_1$ et $R_2$ sont comme défini dans la revendication 4.

6. Un procédé selon l'une quelconque des revendications 1 à 3 dans lequel des diamines aromatiques et aliphatiques totalement acylées sont mises à réagir avec au moins un composé de type anhydride d'acide tricarboxylique et des diamines aliphatiques et aromatiques où le rapport molaire diamine acylée/composé de type anhydride d'acide tricarboxylique/diamines aliphatiques et aromatiques est de 5/10/5 où le copolymère produit comprend les motifs structuraux raux suivants:

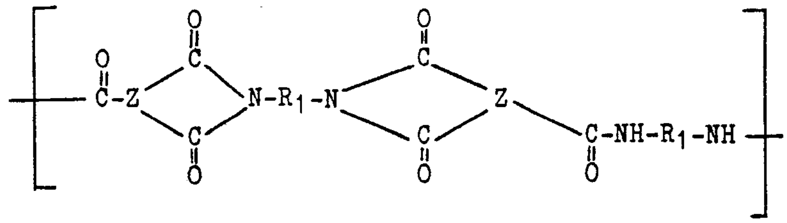

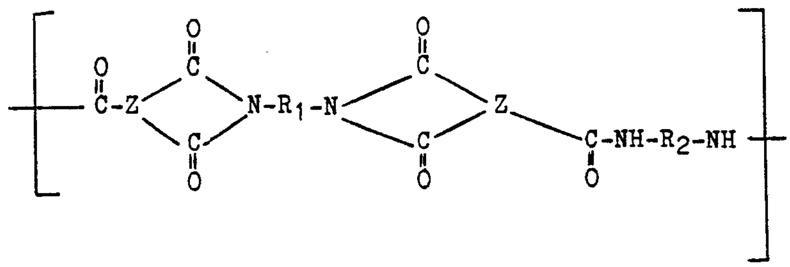

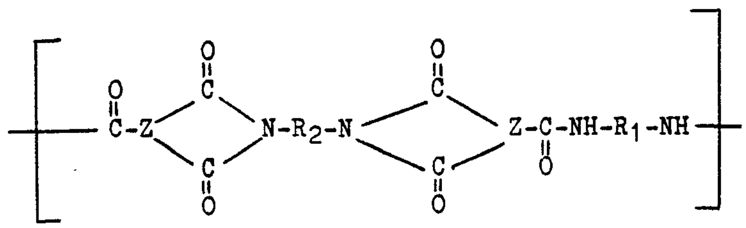

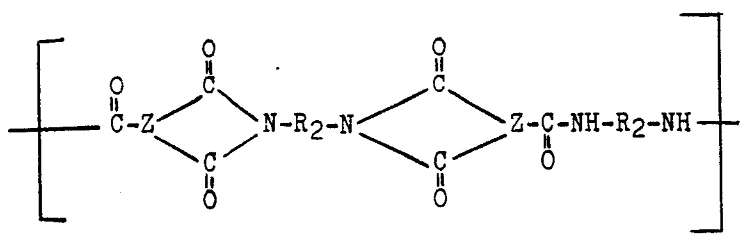

où "Z", $R_1$ et $R_2$ sont comme défini dans la revendication 4.

7. Un procédé selon l'une quelconque des revendications 1 à 4 dans lequel on fait réagir un mélange de diamines aromatiques totalement ou partiellement acylées et aliphatiques totalement acylées avec au moins un composé de type anhydride d'acide tricarboxylique et au moins une diamine aromatique où environ la moitié de la fonctionnalité amine totale est acylée où le copolymère produit comprend les motifs structuraux suivants:

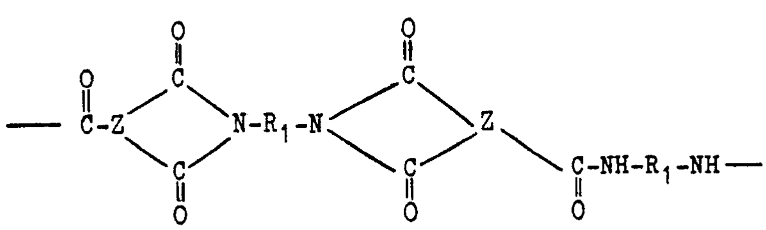

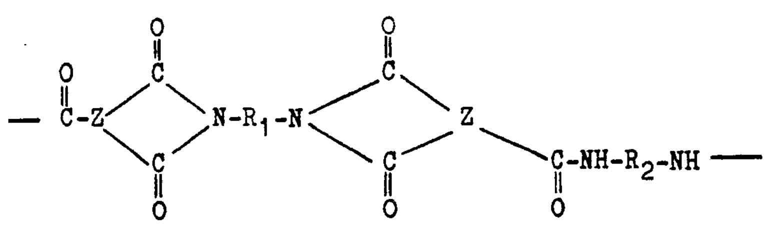

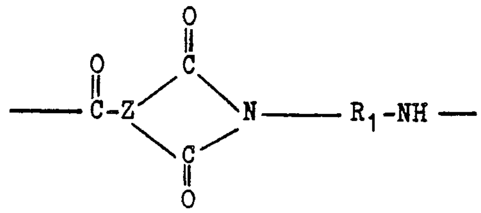

où "Z", $R_1$ et $R_2$ sont comme défini dans la revendication 4.

8. Un procédé selon l'une quelconque des revendications 1 à 3, dans lequel au moins une diamine aromatique totalement ou partiellement acylée est mise à réagir avec au moins un composé de type anhydride d'acide tricarboxylique et au moins une diamine aliphatique ou un mélange de diamines aliphatiques et aromatiques où au moins la moitié de la fonctionnalité amine totale est acylée où le compolymère produit comprend les motifs structuraux suivants:

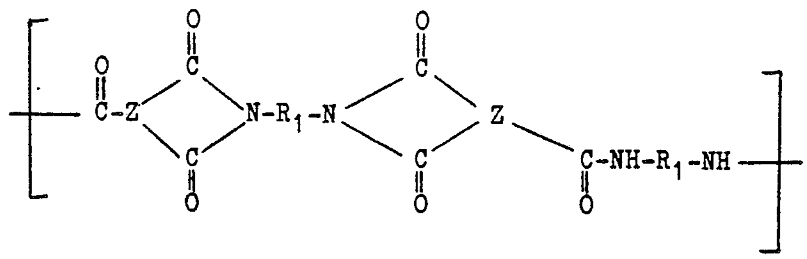

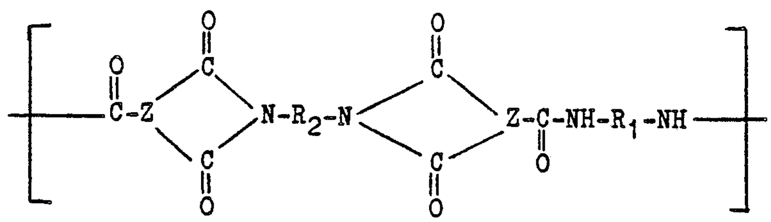

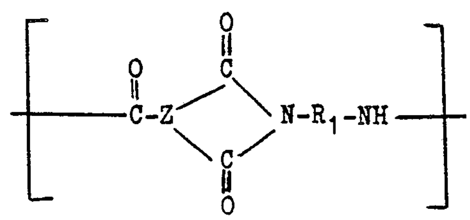

où "Z", $R_1$ et $R_2$ sont comme défini dans la revendication 4.

9. Un procédé selon l'une quelconque des revendications 1 à 4, dans lequel au moins une diamine aromatique totalement ou partiellement acylée et au moins une diamine aliphatique totalement acylée sont mises à réagir avec au moins un composé de type anhydride d'acide tricarboxylique et des diamines aliphatiques et aromatiques où environ la moitié de la fonctionnalité amine totale est acylée où le compolymère produit comprend les motifs structuraux suivants:

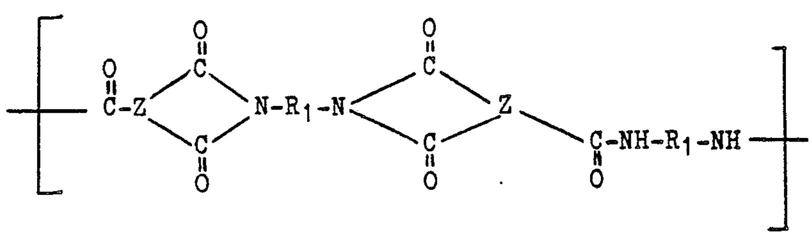

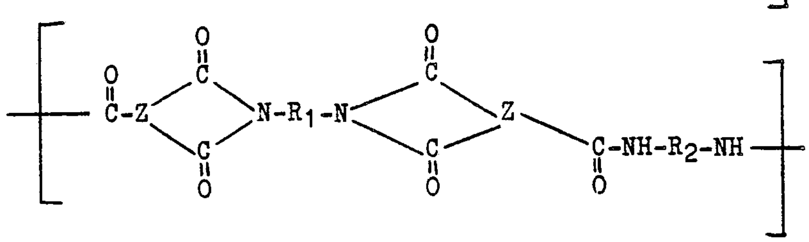

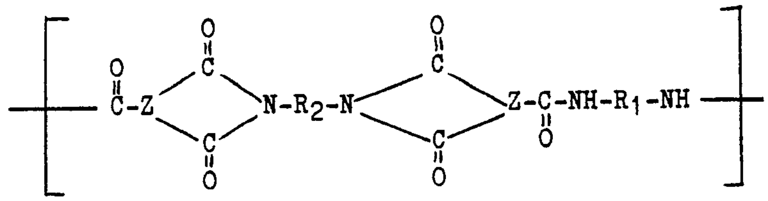

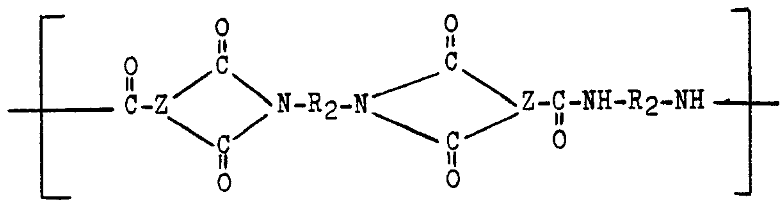

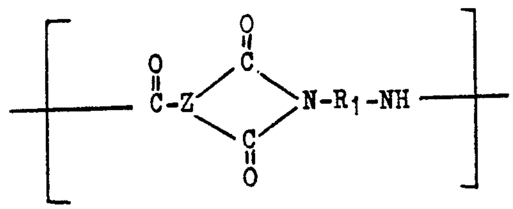

10. Un procédé selon l'une quelconque des revendications 1 à 3 dans lequel on fait réagir des diamines aromatiques et aliphatiques totalement ou partiellement acylées avec au moins un composé de type anhydride d'acide tricarboxylique où 50 à 100% de la fonctionnalité amine totale sont acylés et le compolymère produit comprend les motifs structuraux suivants:

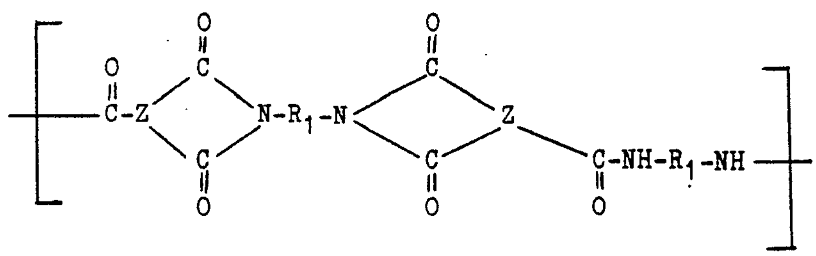

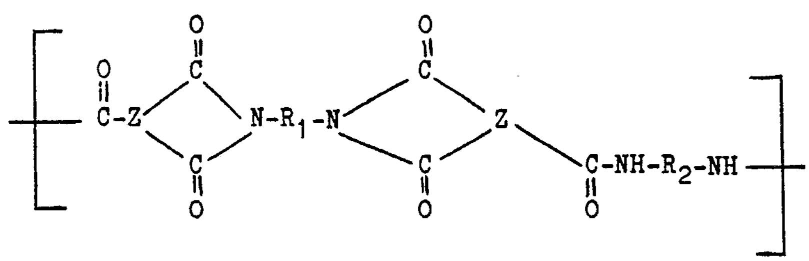

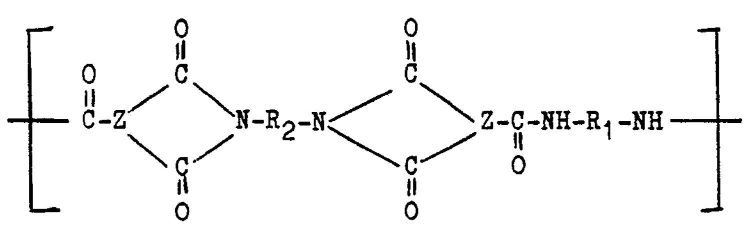

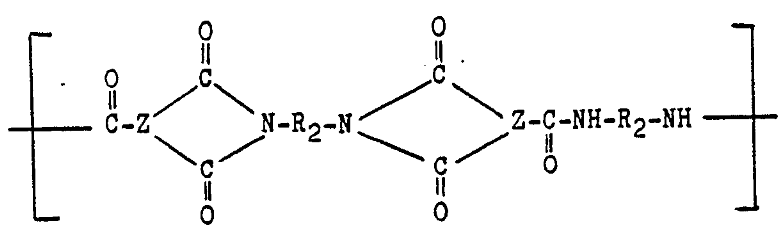

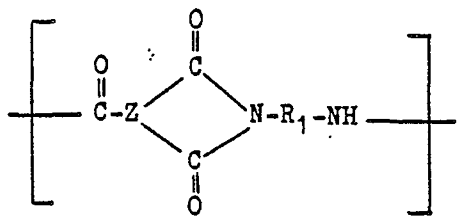

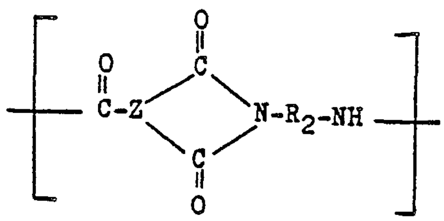

où "Z", $R_1$ et $R_2$ sont comme défini dans la revendication 4.

11. Un procédé selon la revendication 8, dans lequel "Z" est

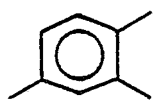

$R_1$ est

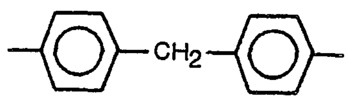

et $R_2$ est

$$-(CH_2)_6-$$

et où le rapport molaire de $Z/R_1/R_2$ est de 4/3/1.

12. Un procédé selon la revendication 8, dans lequel "Z" est

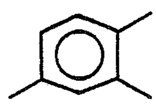

$R_1$ est

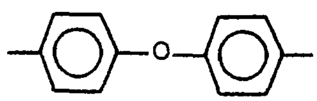

et $R_2$ est

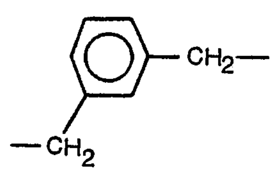

et où le rapport molaire de $Z/R_1/R_2$ est de 3/2/1.

13. Un procédé selon la revendication 4, dans lequel "Z" est

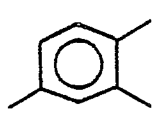

$R_1$ est

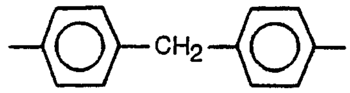

et $R_2$ est

$—(CH_2)_6—$

et où le rapport molaire de $Z/R_1/R_2$ est de 4/3/1.

14. Un procédé selon la revendication 7, dans lequel "Z" est

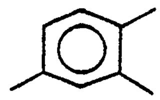

$R_1$ est

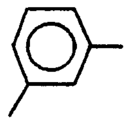

et $R_2$ est

$—(CH_2)_6—$

et où le rapport molaire de $Z/R_1/R_2$ est de 4/3/1.

15. Un procédé selon la revendication 8, dans lequel "Z" est

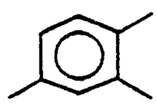

$R_1$ est

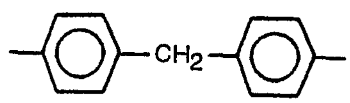

et $R_2$ est

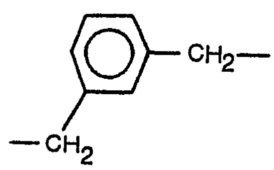

et où le rapport molaire de $Z/R_1/R_2$ est de 4/3/1.

16. Un procédé selon la revendication 7, dans lequel "Z" est

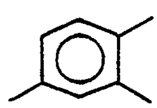

$R_1$ est

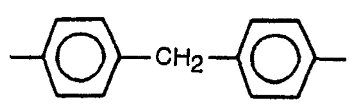

et $R_2$ est

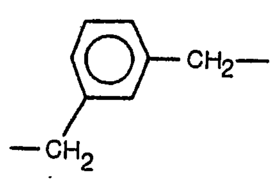

et où le rapport molaire de $Z/R_1/R_2$ est de 4/3/1.

17. Un procédé selon la revendication 10 dans lequel "Z" est

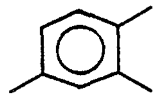

$R_1$ est

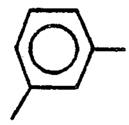

et $R_2$ est

$-(CH_2)_6-$

et où le rapport molaire de $Z/R_1/R_2$ est de 4/3/1.

18. Un procédé selon la revendication 8, dans lequel "Z" est

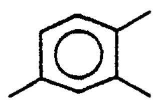

$R_1$ est

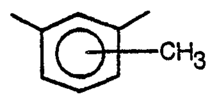

et $R_2$ est

$-(CH_2)_6-$

19. Un procédé selon la revendication 10, dans lequel "Z" est

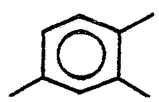

$R_1$ est

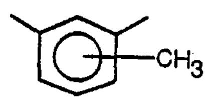

et $R_2$ est

$-(CH_2)_6-$

20. Un copolymère ou terpolymère produit selon l'une quelconque des revendications précédentes.

21. Un copolymère ou terpolymère produit selon l'une quelconque des revendications précédentes sous forme d'un objet moulé.